# EUROPEAN PATENT SPECIFICATION

(11) **EP 3 509 269 B1**
(45) Date of publication and mention of the grant of the patent: **23.04.2025**
(21) Application number: 17854480.5
(22) Date of filing: 26.06.2017
(51) Int. Cl.: H04W 4/00, H04W 4/70

(54) **COMMUNICATION METHOD AND DEVICE**
KOMMUNIKATIONSVERFAHREN UND -VORRICHTUNG
PROCÉDÉ ET DISPOSITIF DE COMMUNICATION

(30) Priority: 28.09.2016 CN 201610857030
(43) Date of publication of application: 10.07.2019
(73) Proprietor: Huawei Technologies Co., Ltd., Longgang District Shenzhen, Guangdong 518129 (CN)
(72) Inventor: CAO, Zhen, Shenzhen Guangdong 518129 (CN); FU, Baicheng, Shenzhen Guangdong 518129 (CN)
(74) Representative: Isarpatent
(86) International application number: PCT/CN2017/089973
(87) International publication number: WO 2018/059026

(56) References cited:
- CN-A- 104 092 776
- US-A1- 2014 372 616
- US-A1- 2015 264 134
- SHELBY K HARTKE C BORMANN UNIVERSITAET BREMEN TZI Z: "The Constrained Application Protocol (CoAP); rfc7252.txt", THE CONSTRAINED APPLICATION PROTOCOL (COAP); RFC7252.TXT, INTERNET ENGINEERING TASK FORCE, IETF; STANDARD, INTERNET SOCIETY (ISOC) 4, RUE DES FALAISES CH- 1205 GENEVA, SWITZERLAND, 27 June 2014 (2014-06-27), pages 1 - 112, XP015100722

## Description

### TECHNICAL FIELD

This application relates to the communications field, and more specifically, to a communication method and apparatus.

### BACKGROUND

The Internet of Things ( IoT) is a network extended and expanded based on the Internet. An objective of the Internet of Things is to implement connections between all things and a network, namely, implement connections of things, so as to perform information exchange and communication and facilitate identification, management, and control.

To implement the connections of things, the Internet of Things needs to have a function of service or resource discovery (hereinafter referred to as resource discovery). The resource discovery includes two processes: resource registration and resource query. For example, a temperature sensor node requests a resource server to register temperature resource information, and the resource server locally stores the temperature resource information that is requested to be registered. This process is referred to as the resource registration. A client requests a resource server to query resource information, and the resource server finds, from locally stored information, the resource information required by the client, and sends the resource information to the client. This process is referred to as the resource query.

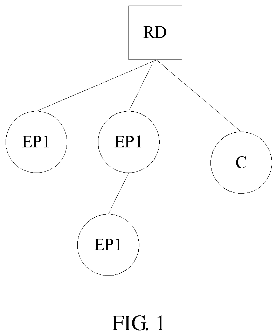

The prior art includes some resource discovery solutions based on the Internet of Things. FIG. 1 is a schematic diagram of an existing resource discovery solution. In FIG. 1, C represents a client; EP1, EP2, and EP3 are sensor nodes; RD is a resource directory node (corresponding to a resource server); and the EP1, EP2, EP3, and C can be all connected to the RD, for example, the EP3 is indirectly connected to the RD by using the EP2. First, the EP1, EP2, and EP3 register resource information with the RD by using a registration interface, and then the client C queries the required resource information from the RD by using a query interface.

However, in the prior art shown in FIG. 1, as a scale of nodes (sensor nodes and client nodes) in the Internet of Things increases, the RD becomes a focus of network access. A very large amount of resource information needs to be stored in the RD. Consequently, the RD can hardly meet a storage requirement. Due to frequent access, the RD also becomes a bottleneck of network performance, and consequently, a request processing delay of the RD increases. There is also a single point of failure in the prior art shown in FIG. 1. Once the RD is faulty, resource discovery becomes unavailable throughout a network.

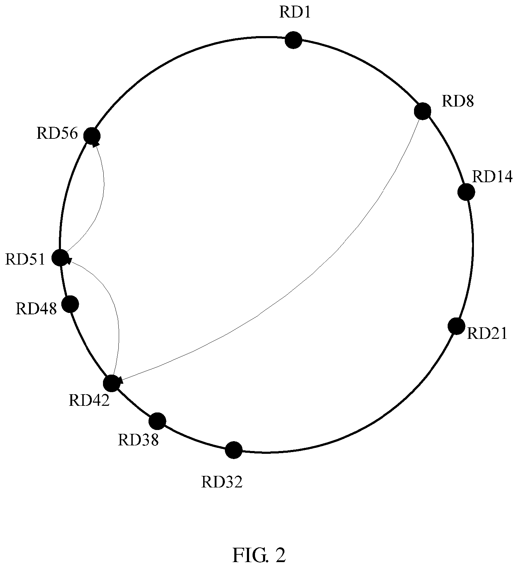

FIG. 2 is a schematic diagram of another existing resource discovery solution. The solution shown in FIG. 2 is an improvement of the solution shown in FIG. 1. In the solution shown in FIG. 2, a plurality of distributed RDs are organized in an overlay network by using a distributed hash table (DHT), and different resource information is stored in different RDs in a distributed manner. This can resolve problems of large storage load and a single point of failure in the existing solution shown in FIG. 1.

However, at a resource registration stage in the solution shown in FIG. 2, after receiving a to-be-registered resource, an RD performs a hash operation on the resource (for example, a uniform resource identifier URI of the resource), and stores the to-be-registered resource in another RD corresponding to a hash operation result, other than the present RD. As a result, a delay at the resource registration stage is relatively large. At a resource query stage in the solution shown in FIG. 2, after initiating a resource query to an RD, a client may obtain a resource required by the client after a plurality of RDs perform querying. As shown in FIG. 2, the client queries a resource from an RD8. The RD8 finds that the resource required by the client is unavailable locally, and the RD8 asks an RD42 based on a routing table, but the RD8 does not know whether the RD42 stores the resource required by the client. The RD42 also finds that the resource required by the client is unavailable locally, and the RD42 asks an RD51 based on a routing table, but the RD42 neither knows whether the RD51 stores the resource required by the client. The RD51 also finds that the resource required by the client is unavailable locally, and the RD51 asks an RD56 based on a routing table, but the RD51 neither knows whether the RD56 stores the resource required by the client. The RD56 finds that the resource required by the client is available locally, and the RD56 sends, to the client, the resource required by the client.

It can be learned from the foregoing that, in the prior art shown in FIG. 2, the problems of large storage load and a single point of failure in the existing solution shown in FIG. 1 are resolved; however, in a resource query process, a client may obtain a required resource by performing a plurality of queries, thereby causing a relatively large delay and reducing resource discovery efficiency.
In the prior art, the following documents relate to the technological background of the present invention:
- D1: US 2015/264134 A1 (DONG LIJUN [US] ET AL) 17 September 2015 (2015-09-17)
- D2: SHELBY K HARTKE C BORMANN UNIVERSITAET BREMEN TZI Z: "The Constrained Application Protocol (CoAP); rfc7252.txt", THE CONSTRAINED APPLICATION PROTOCOL (COAP); RFC7252.TXT, INTERNET ENGINEERING TASK FORCE, IETF; STANDARD, INTERNET SOCIETY (ISOC) 4, RUE DES FALAISES CH- 1205 GENEVA, SWITZERLAND, 27 June 2014 (2014-06-27), pages 1-112, XP015100722, [retrieved on 2014-06-27]
In document D1, a Distributed Resource Directory supports rendezvous by fetching mapping information between CoAP URIs and Node-IDs to determine the address information of resources. D1 discloses storage of multiple copies of resource descriptions in multiple resource directories (RDs) denoted as peer RDs. Here, a home peer sends a registration message to only one peer RD, and notifies other peer RDs of where resources and information associated therewith is stored. Thus, redundant copies of resource registrations are provided in multiple peers.
Document D2 discloses that a message format of a packet contains a 2-bit version field, a 2-bit type field, a 4-bit token length field and a 8-bit unsigned integer code field when used in the framework of a constrained application protocol (CoAP). The CoAP is a specialized web transfer protocol for use with constraint (e.g. low-power, lossy) networks.

### SUMMARY

The object of the present invention is therefore to provide a communication method and apparatus and system, to effectively improve resource discovery efficiency. This object is solved by the independent claims and further advantageous embodiments and improvements of the present invention are listed in the dependent claims. Hereinafter, before coming to a detailed description of the invention with reference to its embodiments and the attached drawings, aspects of the invention which contribute to the understanding of the invention are listed.

According to a first aspect, a communications system is provided. The communications system includes: a centralized redirector, a plurality of resource servers, and a client, where the centralized redirector stores mapping information, and the mapping information is used to indicate a mapping relationship between a resource identifier and an identifier of a resource server in which resource information corresponding to the resource identifier is located; the client is configured to send a first request packet to a first resource server in the plurality of resource servers, where the first request packet includes a first resource identifier, and the first request packet is used to request resource information corresponding to the first resource identifier; the first resource server is configured to send a second request packet to the centralized redirector when the resource information corresponding to the first resource identifier is not stored in the first resource server , where the second request packet includes the first resource identifier; the centralized redirector is configured to send a second response packet to the first resource server based on the first resource identifier and the mapping information, where the second response packet is used to indicate a second resource server in which the resource information corresponding to the first resource identifier is located; and the first resource server is further configured to: obtain, from the second resource server, the resource information corresponding to the first resource identifier; and send a first response packet to the client, where the first response packet includes the resource information corresponding to the first resource identifier.

In this solution, the centralized redirector stores the mapping relationship between a resource identifier and an identifier of a resource server in which resource information corresponding to the resource identifier is located, so that a resource server can obtain the resource information required by the client by using the centralized redirector if the resource information required by the client is not stored. Therefore, resource discovery efficiency can be effectively improved.

With reference to the first aspect, in a possible implementation of the first aspect, in the aspect of sending a second response packet to the first resource server based on the first resource identifier and the mapping information, the centralized redirector is configured to: obtain, based on the mapping information, an identifier that is of the second resource server and that is in a mapping relationship with the first resource identifier; and send the second response packet to the first resource server, where the second response packet includes the identifier of the second resource server; and in the aspect of obtaining, from the second resource server, the resource information corresponding to the first resource identifier, the first resource server is configured to send a third request packet to the second resource server based on the identifier of the second resource server, where the third request packet includes the first resource identifier; the second resource server is configured to send a third response packet to the first resource server, where the third response packet includes the resource information corresponding to the first resource identifier; and the first resource server is configured to obtain, based on the third response packet, the resource information corresponding to the first resource identifier.

In this solution, the response packet sent by the centralized redirector to the first resource server carries the identifier of the second resource server in which the resource information corresponding to the first resource identifier is located, so that the first resource server obtains, by using the second resource server, the resource information requested by the client, and the resource discovery efficiency can be improved.

With reference to the foregoing possible implementation of the first aspect, in a possible implementation of the first aspect, the second response packet includes a Code field, and the Code field is used to indicate that a packet type of the second response packet is a redirection response packet.

In this solution, a packet used to indicate a redirection response packet is proposed. The resource discovery efficiency can be improved by using this type of packet.

With reference to some of the foregoing possible implementations of the first aspect, in a possible implementation of the first aspect, the Code field is represented in a 3.xx format.

With reference to some of the foregoing possible implementations of the first aspect, in a possible implementation of the first aspect, in the aspect of sending a second request packet to the centralized redirector when the resource information corresponding to the first resource identifier is not stored in the first resource server , the first resource server is configured to: perform a hash operation on the first resource identifier, to obtain a bit of the first resource identifier mapped in a bitmap; and send the second request packet to the centralized redirector when the bit of the first resource identifier mapped to the bitmap is not marked as locally stored, where that the bit is not marked as locally stored indicates that the resource information corresponding to the first resource identifier is not stored in the first resource server.

In this solution, the resource information required by the client is searched for by using a hash calculation technology. Efficiency and a speed of information searching can be effectively improved, thereby improving the resource discovery efficiency.

With reference to some of the foregoing possible implementations of the first aspect, in a possible implementation of the first aspect, the mapping information is a mapping table, and the obtaining, by the centralized redirector based on the mapping information, an identifier that is of the second resource server and that is in a mapping relationship with the first resource identifier includes: performing, by the centralized redirector, first hash calculation on the first resource identifier; and obtaining, by the centralized redirector, the identifier of the second resource server based on information stored in the mapping table and corresponding to a result of the first hash calculation.

With reference to some of the foregoing possible implementations of the first aspect, in a possible implementation of the first aspect, the obtaining, by the centralized redirector, the identifier of the second resource server based on information stored in the mapping table and corresponding to a result of the first hash calculation includes: performing, by the centralized redirector, second hash calculation on the first resource identifier and the information stored in the mapping table and corresponding to the result of the first hash calculation; and if information stored in the mapping table and corresponding to a result of the second hash calculation includes a first identifier, determining, by the centralized redirector, that the information stored in the mapping table and corresponding to the result of the first hash calculation is the identifier of the second resource server.

With reference to some of the foregoing possible implementations of the first aspect, in a possible implementation of the first aspect, the communications system further includes a sensor node. The sensor node is configured to send a resource registration packet to the first resource server, where the resource registration packet includes a second resource identifier and resource information corresponding to the second resource identifier, and the resource registration packet is used to request to register the resource information corresponding to the second resource identifier. The first resource server is further configured to store the second resource identifier and the resource information corresponding to the second resource identifier. The first resource server is further configured to send the second resource identifier and an identifier of the first resource server to the centralized redirector. The centralized redirector is further configured to store, a mapping relationship between the second resource identifier and the identifier of the first resource server in the mapping information.

According to a second aspect, a communication method is provided. The communication method includes: receiving, by a first resource server, a first request packet sent by a client, where the first request packet includes a first resource identifier, and the first request packet is used to request resource information corresponding to the first resource identifier; sending, by the first resource server, a second request packet to a centralized redirector when the resource information corresponding to the first resource identifier is not stored, where the second request packet includes the first resource identifier, the centralized redirector stores mapping information, and the mapping information is used to indicate a mapping relationship between a resource identifier and an identifier of a resource server in which resource information corresponding to the resource identifier is located; receiving, by the first resource server, a second response packet sent by the centralized redirector, where the second response packet is used to indicate a second resource server in which the resource information corresponding to the first resource identifier is located; obtaining, by the first resource server based on the second response packet and by using the second resource server, the resource information corresponding to the first resource identifier; and sending, by the first resource server, a first response packet to the client, where the first response packet includes the resource information corresponding to the first resource identifier.

In this solution, the centralized redirector stores the mapping relationship between a resource identifier and an identifier of a resource server in which resource information corresponding to the resource identifier is located, so that a resource server can obtain the resource information required by the client by using the centralized redirector if the resource information required by the client is not stored. Therefore, resource discovery efficiency can be effectively improved.

In one embodiment of the second aspect, the second response packet includes an identifier of the second resource server, and the obtaining, by the first resource server based on the second response packet and by using the second resource server, the resource information corresponding to the first resource identifier includes: sending, by the first resource server, a third request packet to the second resource server based on the identifier of the second resource server, where the third request packet includes the first resource identifier; receiving, by the first resource server, a third response packet sent by the second resource server, where the third response packet includes the resource information corresponding to the first resource identifier; and obtaining, by the first resource server based on the third response packet, the resource information corresponding to the first resource identifier.

In this solution, the response packet sent by the centralized redirector to the first resource server carries the identifier of the second resource server in which the resource information corresponding to the first resource identifier is located, and the first resource server obtains, by using the second resource server, the resource information requested by the client. The resource discovery efficiency can be improved.

With reference to some of the foregoing possible implementations of the second aspect, in one embodiment of the second aspect, the second response packet includes a Code field, and the Code field is used to indicate that a packet type of the second response packet is a redirection response packet.

In this solution, a packet used to indicate a redirection response packet is proposed. The resource discovery efficiency can be improved by using this type of packet.

With reference to some of the foregoing possible implementations of the second aspect, in a possible implementation of the second aspect, the Code field is represented in a 3.xx format.

With reference to some of the foregoing possible implementations of the second aspect, in one embodiment of the second aspect, the sending, by the first resource server, a second request packet to a centralized redirector when the resource information corresponding to the first resource identifier is not stored includes: performing, by the first resource server, a hash operation on the first resource identifier, to obtain a bit of the first resource identifier mapped in a bitmap; and sending the second request packet to the centralized redirector when the bit of the first resource identifier mapped to the bitmap is not marked as locally stored, where that the bit is not marked as locally stored indicates that the resource information corresponding to the first resource identifier is not stored in the first resource server.

With reference to some of the foregoing possible implementations of the second aspect, in one embodiment of the second aspect, the communication method further includes: receiving, by the first resource server, a resource registration packet sent by a sensor node, where the resource registration packet includes a second resource identifier and resource information corresponding to the second resource identifier, and the resource registration packet is used to request to register the resource information corresponding to the second resource identifier; storing, by the first resource server, the second resource identifier and the resource information corresponding to the second resource identifier; and sending, by the first resource server, the second resource identifier and an identifier of the first resource server to the centralized redirector, so that the centralized redirector stores, to the mapping information, a mapping relationship between the second resource identifier and the identifier of the first resource server.

According to a third aspect, a communication method is provided. The communication method includes: receiving, by a centralized redirector, a second request packet sent by a first resource server, where the second request packet includes a first resource identifier, and the second request packet is used to request resource information corresponding to the first resource identifier; and sending, by the centralized redirector, a second response packet to the first resource server based on mapping information, where the second response packet is used by the first resource server to obtain the resource information corresponding to the first resource identifier, and the mapping information is used to indicate a mapping relationship between a resource identifier and an identifier of a resource server in which resource information corresponding to the resource identifier is located.

In this solution, the centralized redirector stores the mapping relationship between a resource identifier and an identifier of a resource server in which resource information corresponding to the resource identifier is located, so that a resource server can obtain the resource information required by a client by using the centralized redirector if the resource information required by the client is not stored. Therefore, resource discovery efficiency can be effectively improved.

With reference to the third aspect, in a possible implementation of the third aspect, the sending, by the centralized redirector, a second response packet to the first resource server based on mapping information includes: obtaining, by the centralized redirector based on the mapping information, an identifier that is of a second resource server and that is in a correspondence with the first resource identifier; and sending, by the centralized redirector, the second response packet to the first resource server, where the second response packet includes the identifier of the second resource server.

In this solution, the response packet sent by the centralized redirector to the first resource server carries the identifier of the second resource server in which the resource information corresponding to the first resource identifier is located, so that the first resource server obtains, by using the second resource server, the resource information requested by the client, and the resource discovery efficiency can be improved.

With reference to the foregoing possible implementation of the third aspect, in a possible implementation of the third aspect, the second response packet includes a Code field, and the Code field is used to indicate that a packet type of the second response packet is a redirection response packet.

With reference to some of the foregoing possible implementations of the third aspect, in a possible implementation of the third aspect, the Code field is represented in a 3.xx format.

With reference to some of the foregoing possible implementations of the third aspect, in a possible implementation of the third aspect, the sending, by the centralized redirector, a second response packet to the first resource server based on mapping information includes: obtaining, by the centralized redirector based on the mapping information, an identifier that is of a second resource server and that is in a correspondence with the first resource identifier; sending, by the centralized redirector, a fourth request packet to the second resource server based on the identifier of the second resource server, where the fourth request packet includes the first resource identifier, and the fourth request packet is used to request the resource information corresponding to the first resource identifier; receiving, by the centralized redirector, a fourth response packet sent by the second resource server, where the fourth response packet includes the resource information corresponding to the first resource identifier; sending, by the centralized redirector, the second response packet to the first resource server, where the second response packet includes the resource information corresponding to the first resource identifier.

With reference to some of the foregoing possible implementations of the third aspect, in a possible implementation of the third aspect, the mapping information is a mapping table, and the obtaining, by the centralized redirector based on the mapping information, an identifier that is of a second resource server and that is in a correspondence with the first resource identifier includes: performing, by the centralized redirector, first hash calculation on the first resource identifier; and obtaining, by the centralized redirector, the identifier of the second resource server based on information stored in the mapping table and corresponding to a result of the first hash calculation.

With reference to some of the foregoing possible implementations of the third aspect, in a possible implementation of the third aspect, the obtaining, by the centralized redirector, the identifier of the second resource server based on information stored in the mapping table and corresponding to a result of the first hash calculation includes: performing, by the centralized redirector, second hash calculation on the first resource identifier and the information stored in the mapping table and corresponding to the result of the first hash calculation; and if information stored in the mapping table and corresponding to a result of the second hash calculation includes a first identifier, determining, by the centralized redirector, that the information stored in the mapping table and corresponding to the result of the first hash calculation is the identifier of the second resource server.

With reference to some of the foregoing possible implementations of the third aspect, in a possible implementation of the third aspect, the communication method further includes: receiving, by the centralized redirector, a second resource identifier and an identifier of the first resource server that are sent by the first resource server; and storing, by the centralized redirector, a mapping relationship between the second resource identifier and the identifier of the first resource server to the mapping information.

According to a fourth aspect, a communication method is provided. The communication method includes: sending, by a client, a request packet, to a first resource server, where the request packet includes a first resource identifier, and the request packet is used to request resource information corresponding to the first resource identifier, so that the first resource server forwards the request packet to a centralized redirector if the resource information corresponding to the first resource identifier is not stored, and requests, from a second resource server, the resource information corresponding to the first resource identifier based on a response packet that is sent by the centralized redirector and that is used to indicate the second resource server in which the resource information corresponding to the first resource identifier is located, where the centralized redirector restores mapping information, and the mapping information is used to indicate a mapping relationship between a resource identifier and an identifier of a resource server in which resource information corresponding to the resource identifier is located; and receiving, by the client, a response packet that is sent by the first resource server and that includes the resource information corresponding to the first resource identifier.

In this solution, the centralized redirector stores the mapping relationship between a resource identifier and an identifier of a resource server in which resource information corresponding to the resource identifier is located, so that a resource server can obtain the resource information required by the client by using the centralized redirector if the resource information required by the client is not stored. Therefore, resource discovery efficiency can be effectively improved.

With reference to the fourth aspect, in a possible implementation of the fourth aspect, the response packet that is sent by the centralized redirector and that is used to indicate the second resource server in which the resource information corresponding to the first resource identifier is located includes an identifier of the second resource server; and
the first resource server is configured to request, based on the identifier of the second resource server, the second resource server for the resource information corresponding to the first resource identifier.

With reference to the foregoing possible implementation of the fourth aspect, in a possible implementation of the fourth aspect, the response packet that is sent by the centralized redirector and that is used to indicate the second resource server in which the resource information corresponding to the first resource identifier is located includes a Code field, and the Code field is used to indicate that a packet type of the response packet is a redirection response packet.

With reference to some of the foregoing possible implementations of the fourth aspect, in a possible implementation of the fourth aspect, the Code field is represented in a 3.xx format.

According to a fifth aspect, a communication method is provided. The communication method includes: receiving, by a first device, a Constrained Application Protocol CoAP request packet sent by a second device, where the CoAP request packet is used to request target information; and sending, by the first device, a CoAP response packet to the second device, where the CoAP response packet includes an identifier of a third device, and the CoAP response packet is used to indicate that the target information is stored in the third device, so that the second device requests the target information from the third device based on the identifier of the third device.

In this solution, after receiving the CoAP request packet that is sent by the second device and that is used to request the target information, the first device sends, to the second device, the CoAP response packet including the identifier of the third device, to indicate that the target information is stored in the third device, so that the second device obtains the required target information by using the third device. Therefore, information obtaining efficiency can be improved.

With reference the fifth aspect, in a possible implementation of the fifth aspect, the CoAP response packet includes a Code field, and the Code field is used to indicate that a packet type of the CoAP response packet is a redirection response packet.

With reference to the foregoing possible implementations of the fifth aspect, in a possible implementation of the fifth aspect, the Code field is represented in a 3.xx format.

With reference to some of the foregoing possible implementations of the fifth aspect, in a possible implementation of the fifth aspect, before the sending, by the first device, the CoAP response packet to the second device, the communication method further includes: determining, by the first device, that the target information is migrated to the third device; or determining, by the first device, that a replica of the target information is stored in the third device; or determining, by the first device, that the third device is a proxy access device of the target information.

According to a sixth aspect, a communication method is provided. The communication method includes: sending, by a second device, a first Constrained Application Protocol CoAP request packet to a first device, where the first CoAP request packet is used to request target information; receiving, by the second device, a first CoAP response packet sent by the first device, where the first CoAP response packet includes an identifier of a third device, and the first CoAP response packet is used to indicate that the target information is stored in the third device; sending, by the second device to the third device based on the identifier of the third device, a second CoAP request packet used to request the target information; receiving, by the second device, a second CoAP response packet sent by the third device, where the second CoAP response packet includes the target information; and obtaining, by the second device, the target information based on the second CoAP response packet.

In this solution, after receiving the CoAP request packet that is sent by the second device and that is used to request the target information, the first device sends, to the second device, the CoAP response packet including the identifier of the third device, to indicate that the target information is stored in the third device, so that the second device obtains the required target information by using the third device. Therefore, information obtaining efficiency can be improved.

With reference to the sixth aspect, in a possible implementation of the sixth aspect, the CoAP response packet includes a Code field, and the Code field is used to indicate that a packet type of the CoAP response packet is a redirection response packet.

With reference to the sixth aspect, in a possible implementation of the sixth aspect, the Code field is represented in a 3.xx format.

According to a seventh aspect, a resource server is provided. The resource server is configured to perform the method in any one of the second aspect or the possible implementations of the second aspect. Specifically, the resource server may include a module configured to perform the method in any one of the second aspect or the possible implementations of the second aspect.

According to an eighth aspect, a centralized redirector is provided. The centralized redirector is configured to perform the method in any one of the third aspect or the possible implementations of the third aspect. Specifically, the centralized redirector may include a module configured to perform the method in any one of the third aspect or the possible implementations of the third aspect.

According to a ninth aspect, a client is provided. The client is configured to perform the method provided in the fourth aspect.

According to a tenth aspect, a communications device is provided. The communications device is configured to perform the method in any one of the fifth aspect or the possible implementations of the fifth aspect. Specifically, the communications device may include a module configured to perform the method in any one of the fifth aspect or the possible implementations of the fifth aspect.

According to an eleventh aspect, a communications device is provided. The communications device is configured to perform the method in any one of the sixth aspect or the possible implementations of the sixth aspect. Specifically, the communications device may include a module configured to perform the method in any one of the sixth aspect or the possible implementations of the sixth aspect.

According to a twelfth aspect, a resource server is provided. The resource server includes a memory and a processor. The memory is configured to store an instruction. The processor is configured to execute the instruction stored in the memory, and the execution of the instruction stored in the memory enables the processor to perform the method in any one of the second aspect or the possible implementations of the second aspect.

According to a thirteenth aspect, a centralized redirector is provided. The centralized redirector includes a memory and a processor. The memory is configured to store an instruction. The processor is configured to execute the instruction stored in the memory, and the execution of the instruction stored in the memory enables the processor to perform the method in any one of the third aspect or the possible implementations of the third aspect.

According to a fourteenth aspect, a client is provided. The client includes a memory and a processor. The memory is configured to store an instruction. The processor is configured to execute the instruction stored in the memory, and the execution of the instruction stored in the memory enables the processor to perform the method provided in the fourth aspect.

According to a fifteenth aspect, a communications device is provided. The communications device includes a memory and a processor. The memory is configured to store an instruction. The processor is configured to execute the instruction stored in the memory, and the execution of the instruction stored in the memory enables the processor to perform the method in any one of the fifth aspect or the possible implementations of the fifth aspect.

According to a sixteenth aspect, a communications device is provided. The communications device includes a memory and a processor. The memory is configured to store an instruction. The processor is configured to execute the instruction stored in the memory, and the execution of the instruction stored in the memory enables the processor to perform the method in any one of the sixth aspect or the possible implementations of the sixth aspect.

### BRIEF DESCRIPTION OF DRAWINGS

FIG. 1 is a schematic diagram of a resource discovery method in the prior art;
FIG. 2 is a schematic diagram of another resource discovery method in the prior art;
FIG. 3 is a schematic diagram of a communications system according to an embodiment of the present application;
FIG. 4 is a schematic flowchart of a communication method according to an embodiment of the present application;
FIG. 5 is another schematic flowchart of a communication method according to an embodiment of the present application;
FIG. 6 is a schematic structural diagram of a CoAP packet according to an embodiment of the present application;
FIG. 7 is still another schematic flowchart of a communication method according to an embodiment of the present application;
FIG. 8 is still another schematic flowchart of a communication method according to an embodiment of the present application;
FIG. 9 is another schematic diagram of a system architecture according to an embodiment of the present application;
FIG. 10 is a schematic block diagram of a resource server according to an embodiment of the present application;
FIG. 11 is another schematic block diagram of a resource server according to an embodiment of the present application;
FIG. 12 is a schematic block diagram of a communications device according to an embodiment of the present application; and
FIG. 13 is a schematic block diagram of another communications device according to an embodiment of the present application.

### DESCRIPTION OF EMBODIMENTS

For ease of understanding and description of embodiments of the present application, several terms included in the embodiments of the present application are first described.

In the embodiments of the present application, resource information may indicate measurement information of a sensor, for example, temperature measurement information of a temperature sensor or pressure measurement information of a pressure sensor.

Specifically, for example, when a resource is temperature, corresponding resource information is temperature measurement information; for another example, when a resource is pressure, corresponding resource information is temperature measurement information.

In the embodiments of the present application, a resource identifier is information used to indicate resource information. Specifically, an expression form of the resource identifier may be a uniform resource identifier (Uniform Resource Identifier, URI).

In the embodiments of the present application, an identifier of a resource server in information that can indicate the resource server. Specifically, for example, the identifier of the resource server is information such as an IP address, a MAC address, or a device ID of the resource server.

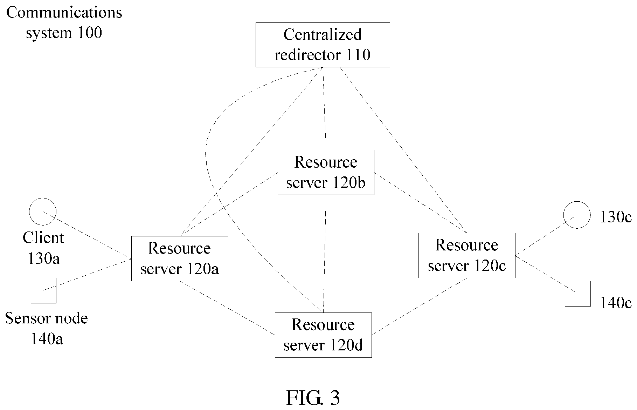

FIG. 3 is a schematic diagram of a communications system 100 according to an embodiment of the present application. The communications system 100 includes: a centralized redirector (Centralized Redirector, CRD) 110, a plurality of resource servers 120 (four resource servers are schematically shown in FIG. 3), and a plurality of clients 130 (two clients are schematically shown in FIG. 3). The centralized redirector 110 stores mapping information. The mapping information is used to indicate a mapping relationship between a resource identifier and an identifier of a resource server in which resource information corresponding to the resource identifier is located.

In this embodiment of the present application, the identifier of the resource server represents information used to indicate the resource server, for example, an IP address or a MAC address of the resource server, or information that can uniquely identify the resource server, such as a device ID of the resource server.

A client (such as 130a shown in FIG. 3) is configured to send a first request packet to a first resource server (such as 120a shown in FIG. 3) in the plurality of resource servers 120. The first request packet includes a first resource identifier, and the first request packet is used to request resource information corresponding to the first resource identifier.

The first resource server is configured to send a second request packet to the centralized redirector 110 if the resource information corresponding to the first resource identifier is not stored. The second request packet includes the first resource identifier.

The centralized redirector 110 is configured to send a second response packet to the first resource server based on the first resource identifier and the mapping information. The second response packet is used to indicate a second resource server (such as 120c shown in FIG. 3) in which the resource information corresponding to the first resource identifier is located.

The first resource server is further configured to: obtain, from the second resource server, the resource information corresponding to the first resource identifier; and send a first response packet to the client, where the first response packet includes the resource information corresponding to the first resource identifier.

In this embodiment of the present application, the centralized redirector stores the mapping relationship between a resource identifier and an identifier of a resource server in which resource information corresponding to the resource identifier is located, so that a resource server can obtain the resource information required by the client by using the centralized redirector if the resource information required by the client is not stored. Therefore, resource discovery efficiency can be effectively improved.

Specifically, in this embodiment of the present application, the centralized redirector 110 is deployed in a centralized manner. For example, the centralized redirector 110 is a logical entirety. A specific physical deployment manner may be a clustered manner. The plurality of resource servers 120 are deployed in a distributed manner. Specifically, the resource servers 120 may be local resource directory (Local Resource Directory, LRD) devices, or may be local gateways. The clients 130 are configured to request resource information from local resource servers. For example, the client 130a requests resource information from a resource server 120a, and a client 130d requests resource information from a resource server 120d. Specifically, the clients 130 may be user equipments or user terminals.

It should be understood that the centralized redirector 110 is communicatively connected to the resource servers 120; the resource servers 120 are communicatively connected to each other, for example, the resource servers 120a to 120d are communicatively connected to each other; and the clients 130 are communicatively connected to the local resource servers, for example, the client 130a is communicatively connected to a resource server 120a.

It should be further understood that the communications system 100 further includes:
a plurality of sensor nodes 140 (two sensor nodes are schematically shown in FIG. 3), configured to report generated resource information to the local resource servers 120, for example, a sensor node 140a reports generated resource information to the local resource server 120a; for another example, a sensor node 140c reports generated resource information to the local resource server 120c.

Specifically, for example, the sensor nodes 130 may be sensor devices such as temperature sensors or humidity sensors.

Optionally, this embodiment of the present application may be applied to the Internet of Things. Correspondingly, the clients 130 are Internet of Things clients.

It should be understood that FIG. 3 is merely an example but not a limitation. One resource server may be connected to a plurality of sensor nodes or a plurality of clients. This is not limited in this embodiment of the present application.

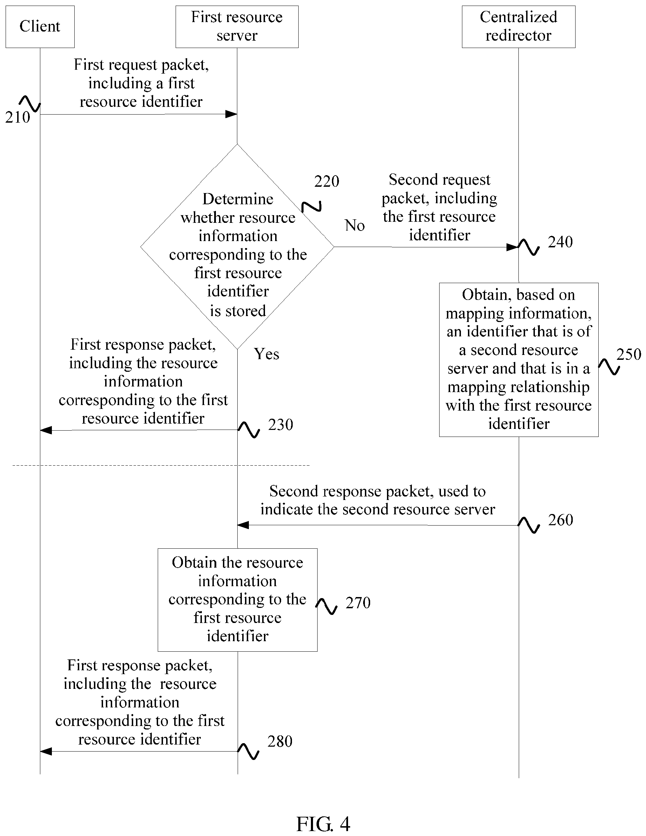

The following describes in detail a communication method in the embodiments of the present application with reference to FIG. 4 to FIG. 10.

FIG. 4 is a schematic flowchart of a communication method according to an embodiment of the present application. A resource query process is specifically described. As shown in FIG. 4, the method includes the following steps.

210: A client sends a first request packet to a first resource server, where the first request packet includes a first resource identifier, and the first request packet is used to request resource information corresponding to the first resource identifier.

Specifically, the resource information requested by the client may be sensor measurement information, for example, temperature collection information or humidity collection information. The first resource identifier is an identifier used to indicate the resource information requested by the client.

Specifically, an expression form of the first resource identifier is a uniform resource identifier (Uniform Resource Identifier, URI).

220: The first resource server determines whether the resource information corresponding to the first resource identifier is stored locally; and if yes, proceeds to step 230; or if no, proceeds to step 240.

230: The first resource server sends, to the client, the resource information corresponding to the first resource identifier.

Specifically, first, the resource information corresponding to the first resource identifier is obtained from locally stored information based on the first resource identifier; and then the obtained resource information is sent to the client.

240: The first resource server sends a second request packet to a centralized redirector when the resource information corresponding to the first resource identifier is not stored, where the second request packet includes the first resource identifier.

250: The centralized redirector receives the second request packet sent by the first resource server, and obtains, based on mapping information, an identifier that is of a second resource server and that is in a mapping relationship with the first resource identifier, where the mapping information is used to indicate a mapping relationship between a resource identifier and an identifier of a resource server in which resource information corresponding to the resource identifier is located.

260: The centralized redirector sends a second response packet to the first resource server, where the second response packet is used to indicate the second resource server in which the resource information corresponding to the first resource identifier is located.

270: The first resource server obtains, based on the second response packet and by using the second resource server, the resource information corresponding to the first resource identifier.

280: The first resource server sends a first response packet to the client, where the first response packet includes the resource information corresponding to the first resource identifier.

Specifically, in this embodiment of the present application, for example, the centralized redirector is the centralized redirector 110 shown in FIG. 3, the first resource server is the resource server 120a shown in FIG. 3, the client is the client 130a shown in FIG. 3, and the second resource server is the resource server 120c shown in FIG. 3.

In this embodiment of the present application, the centralized redirector stores the mapping relationship between a resource identifier and an identifier of a resource server in which resource information corresponding to the resource identifier is located, so that a resource server can obtain the resource information required by the client by using the centralized redirector if the resource information required by the client is not stored. Therefore, resource discovery efficiency can be effectively improved.

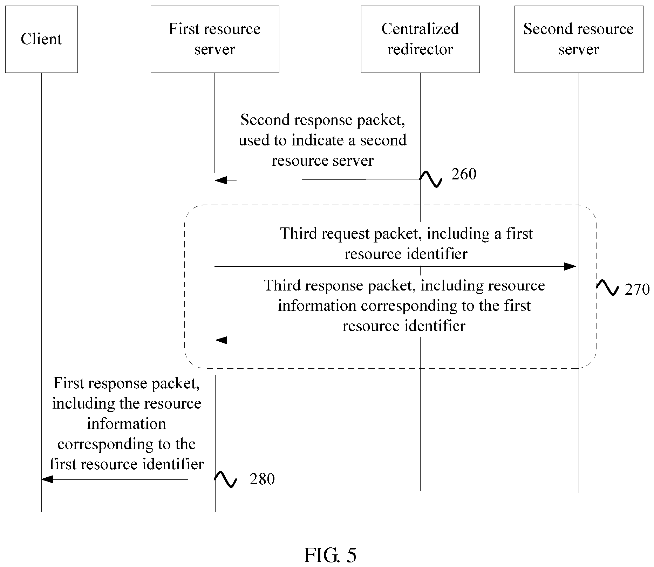

Optionally, as shown in FIG. 5, in an embodiment, in the embodiment shown in FIG. 4, the second response packet includes the identifier of the second resource server, and that the first resource server obtains, based on the second response packet and by using the second resource server, the resource information corresponding to the first resource identifier in step 270 includes:
sending, by the first resource server, a third request packet to the second resource server based on the identifier of the second resource server, where the third request packet includes the first resource identifier;
receiving, by the first resource server, a third response packet sent by the second resource server, where the third response packet includes the resource information corresponding to the first resource identifier; and
obtaining, by the first resource server based on the third response packet, the resource information corresponding to the first resource identifier.

In this embodiment of the present application, the response packet sent by the centralized redirector to the first resource server carries the identifier of the second resource server in which the resource information corresponding to the first resource identifier is located, and the first resource server obtains, by using the second resource server, the resource information requested by the client. The resource discovery efficiency can be improved.

Optionally, in an embodiment, in step 260 in the embodiment shown in FIG. 4, the second response packet directly carries the resource information corresponding to the first resource identifier. Specifically, after step 250 in the embodiment shown in FIG. 4, the centralized redirector requests, from the second resource server, the resource information corresponding to the first resource identifier; and in step 260, sends, to the first resource server by using the second response packet, the resource information corresponding to the first resource identifier that is obtained from the second resource server.

Optionally, in an embodiment, in the embodiment shown in FIG. 4, that the first resource server sends a second request packet to a centralized redirector when the resource information corresponding to the first resource identifier is not stored in step 240 includes: performing, by the first resource server, a hash operation on the first resource identifier, to obtain a bit of the first resource identifier mapped in a bitmap; and sending, by the first resource server, the second request packet to the centralized redirector when the bit of the first resource identifier mapped to the bitmap is not marked as locally stored, where that the bit is not marked as locally stored indicates that the resource information corresponding to the first resource identifier is not stored in the first resource server.

In this embodiment of the present application, efficiency of searching for resource information by a resource server can be improved, thereby improving the resource discovery efficiency.

Optionally, in an embodiment, in the embodiment shown in FIG. 4, the mapping information is a mapping table, and that the centralized redirector obtains, based on mapping information, an identifier that is of a second resource server and that is in a mapping relationship with the first resource identifier in step 250 includes: performing, by the centralized redirector, first hash calculation on the first resource identifier; and obtaining, by the centralized redirector, the identifier of the second resource server based on information stored in the mapping table and corresponding to a result of the first hash calculation.

Specifically, the obtaining, by the centralized redirector, the identifier of the second resource server based on information stored in the mapping table and corresponding to a result of the first hash calculation includes: performing, by the centralized redirector, second hash calculation on the first resource identifier and the information stored in the mapping table and corresponding to the result of the first hash calculation; and if information stored in the mapping table and corresponding to a result of the second hash calculation includes a first identifier, determining, by the centralized redirector, that the information stored in the mapping table and corresponding to the result of the first hash calculation is the identifier of the second resource server.

In this embodiment of the present application, the centralized redirector searches, by using a hash search manner, for an address of a resource server corresponding to a resource identifier. Compared with a search means such as string matching, this can effectively improve search efficiency. In addition, scalability is also good.

Compared with that in the Internet, many devices in the Internet of Things are of a resource-limited type, that is, these devices have only small memory space and a limited computing capability. Therefore, the conventional Hypertext Transfer Protocol (HTTP) is too vast to be applicable to the Internet of Things. Therefore, the CoRE (Constrained RESTful Environment) workgroup of the Internet Engineering Task Force (IETF) formulates a related application layer protocol in a Representational State Transfer form for a resource-limited node. This application layer protocol based on a REST structure is the Constrained Application Protocol ( CoAP).

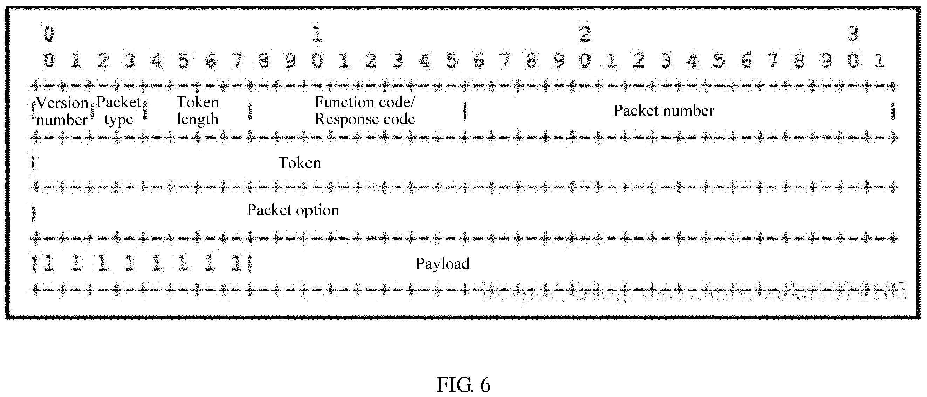

Optionally, the request packet and the response packet included in the foregoing embodiment may be CoAP-based protocol packets. FIG. 6 is a schematic structural diagram of a CoAP protocol packet. Like other protocols in the TCP/IP Protocol Family, the CoAP protocol always appears ahead of a payload in a form of a packet header, and a single byte 0xFF is used to separate the payload from the packet header. As shown in FIG. 6, a CoAP protocol packet includes the following parts: a version number (Ver), indicating a version number of the CoAP protocol, where the version number occupies 2 bits, and has a value of 01B; a packet type (T), where the CoAP protocol defines packets in four different forms: a CON packet, a NON packet, an ACK packet, and an RST packet; a CoAP token length (TKL), where the CoAP protocol has two identifiers with similar functions: a packet number (Message ID), and a token (Token) that identifies specific content, where a token length is specified by using the TKL, and each CoAP packet includes a message ID, but a token is not mandatory for a CoAP packet; a function code/response code (Code), where the code has different expression forms in a CoAP request packet and a CoAP response packet, the code occupies one type and is divided into two parts, with one part including the first 3 bits and the other part including the last 5 bits, the code is described as a c.dd structure for ease of description, and in the prior art, 0.XX indicates a CoAP request packet, and 2.XX, 4.XX, or 5.XX indicates a specific expression of a CoAP response packet; and a packet option (Option), where a CoAP host, a CoAP request parameter, a payload media type, and the like can be set by using the packet option, and "1111 1111" is a separator between a CoAP packet header and a specific payload.

Specifically, a structure of the request packet included in the foregoing embodiment is shown in FIG. 6. The Code field is represented in a "0.XX" format. The payload is carried in the payload field. For example, the payload is the first resource identifier.

Specifically, a structure of the response packet included in the foregoing embodiment is shown in FIG. 6. The Code field is represented in a "2.XX", "4.XX", or "5.XX" format. The payload is carried in the payload field. For example, the payload is the identifier of the second resource server, or the resource information corresponding to the first resource identifier.

Optionally, in an embodiment, in the embodiment shown in FIG. 5, the second response packet includes a Code field, and the Code field is used to indicate that a packet type of the second response packet is a redirection response packet.

Specifically, the Code field in the second response packet sent by the centralized redirector to the first resource server is represented in a "3.XX" format, and the identifier of the second resource server is carried in a payload field.

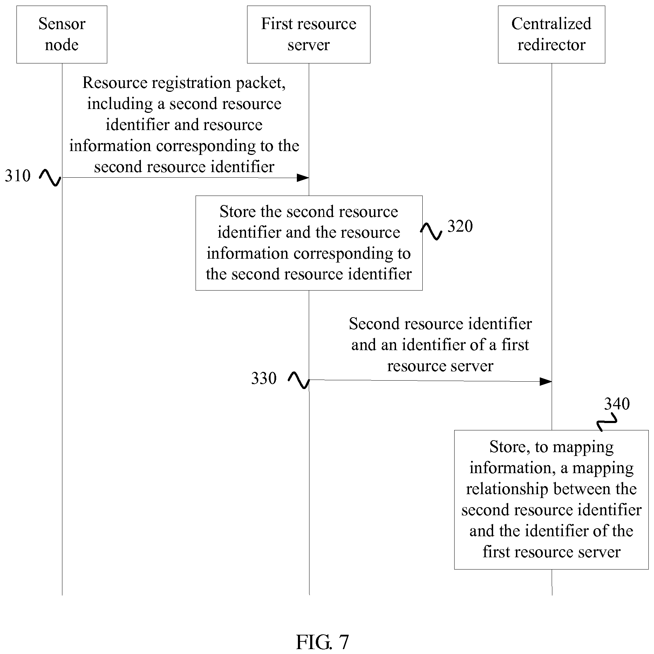

FIG. 7 is another schematic flowchart of a communication method according to an embodiment of the present application. A resource registration process is specifically described. As shown in FIG. 7, the communication method includes the following steps.

310: A sensor node sends a resource registration packet to a first resource server, where the resource registration packet includes a second resource identifier and resource information corresponding to the second resource identifier, and the resource registration packet is used to request to register the resource information corresponding to the second resource identifier.

It should be understood that the resource registration packet may also be based on the CoAP protocol. A specific format is shown in FIG. 6.

Specifically, the resource registration packet may include a plurality of pairs of second resource identifiers and corresponding resource information.

Specifically, the second resource identifier and the corresponding resource information may be explicitly or implicitly carried in the resource registration request packet.

320: The first resource server stores the second resource identifier and the resource information corresponding to the second resource identifier.

330: The first resource server sends the second resource identifier and an identifier of the first resource server to a centralized redirector.

340: The centralized redirector stores, to mapping information, a mapping relationship between the second resource identifier and the identifier of the first resource server, where the mapping information is used to store a mapping relationship between a resource identifier and an address of a resource server in which resource information corresponding to the resource identifier is located.

In this embodiment of the present application, the centralized redirector stores the mapping information, where the mapping information includes a mapping relationship between a resource identifier and an address of a resource server in which resource information corresponding to the resource identifier is located, so that the centralized redirector can provide a redirection service for a resource server, that is, is configured to indicate an identifier of a resource server in which requested resource information is located. Therefore, a resource query delay can be effectively reduced, and resource discovery efficiency can be improved.

Optionally, in an embodiment, in step 320 in the embodiment shown in FIG. 7, after the first resource server stores the second resource identifier and the resource information corresponding to the second resource identifier, the first resource server performs a hash operation on the second resource identifier, to obtain a bit of the second resource identifier mapped to a bitmap; and the first resource server marks the bit of the second resource identifier mapped to the bitmap as locally stored.

Specifically, the hash operation is first performed on the second resource identifier, and then a modulo operation is performed on an integer, to obtain a bit location in the bitmap. For example, the second resource identifier is a URI, and a function of the hash operation is hash(URI) mod K.

Specifically, a hash table of a resource identifier and a bit of the resource identifier mapped to a bitmap is maintained in the first resource server. The hash table is used to mark whether resource information corresponding to the resource identifier is information locally stored in the first resource server.

Correspondingly, in the embodiment shown in FIG. 4, in step 220, the first resource server performs a hash operation on the first resource identifier, to obtain a bit of the first resource identifier mapped in a bitmap; and when the bit of the first resource identifier mapped to the bitmap is not marked as locally stored, determines that the resource information corresponding to the first resource identifier is not stored in the first resource server; or if the bit of the first resource identifier mapped to the bitmap is marked as locally stored, determines that the resource information corresponding to the first resource identifier is stored in the first resource server.

In this embodiment of the present application, efficiency of searching for resource information by a resource server can be improved, thereby improving the resource discovery efficiency.

Optionally, in an embodiment, in step 340 in the embodiment shown in FIG. 7, the mapping information is a mapping table. The centralized redirector performs hash calculation on the second resource identifier, and determines a first location in the mapping table based on a result of the hash calculation; and the centralized redirector stores the identifier of the first resource server to the first location in the mapping table.

During storage of a resource identifier and an address of a resource server, if a plurality of different resource identifiers are mapped to a same address, the plurality of resource identifiers may be stored by using a linked-list data structure.

In this embodiment of the present application, the centralized redirector searches, by using a hash search manner, for an address of a resource server corresponding to a resource identifier. Compared with a search means such as string matching, this can effectively improve search efficiency. In addition, scalability is also good.

Correspondingly, in step 250 in the embodiment shown in FIG. 4, the centralized redirector performs hash calculation on the first resource identifier, and determines a second location in the mapping table based on a result of the hash calculation; and the centralized redirector determines that an address stored in the second location in the mapping table is an address, mapped to the first resource identifier, of the second resource server.

Specifically, the hash calculation is performed on the first resource identifier, and then a modulo operation is performed on an integer L, to obtain the second location in the mapping table. For example, the first resource identifier is a URI, and an algorithm for determining the second location in the mapping table is hash(URI) mod L.

A false positive (False Positive) occurs due to collision of hash functions. For example, data A that is not stored and data B that is stored may be mapped to a same value through hashing, thereby causing a false positive that the data A is stored locally. To avoid a false positive, this embodiment of the present application proposes a false positive prevention method.

Optionally, in an embodiment, in the embodiment shown in FIG. 7, the method further includes: performing, by the centralized redirector, hash calculation on the second resource identifier and an address of the first resource server, and determining a third location in the mapping table based on a result of the hash calculation; and storing, by the centralized redirector, a first identifier to the third location in the mapping table, where the first identifier is used to indicate that a mapping relationship between the second resource identifier and the address of the first resource server is stored in the mapping table. Correspondingly, in step 250 shown in FIG. 4, the centralized redirector performs hash calculation on the first resource identifier, and determines a second location in the mapping table based on a result of the hash calculation; the centralized redirector performs hash calculation on the first resource identifier and an address stored in the second location in the mapping table, and determines a fourth location in the mapping table based on a result of the hash calculation; and if a first identifier is stored in the fourth location in the mapping table, the centralized redirector determines that the address stored in the second location in the mapping table is an address, mapped to the first resource identifier, of the second resource server.

Specifically, the centralized redirector designs two hash tables, and when mapping of both tables is positive (Positive), a query hit is returned. Specific steps are as follows:
(1) Two hash tables are maintained during hash construction, and are respectively defined as a primary hash table and a secondary hash table.
(2) An input value of the primary hash table is a mapping from a key to an internal storage location, for example, a mapping from a URI (corresponding to a resource identifier) to an IP address (corresponding to an address of a resource server) linked-list.
(3) An input value of the secondary hash table is a key and a corresponding value of the key in the primary hash table. A corresponding location of the input value in the secondary hash table is set to 1.
(4) A query process is divided into two substeps. First, the primary hash table is queried. If a query result is not empty, the secondary hash table continues to be queried. Input is a query keyword and the query result of the primary hash table. A query result is considered to be true only when both results of the two queries are positive (Positive); otherwise, a query failure is returned.

In this embodiment of the present application, a double-hash-calculation mechanism is designed. In a resource query process, a false positive (False positive) probability can be effectively reduced, thereby improving the resource discovery efficiency.

It should be noted that, for ease of understanding and description rather than limitation, in the embodiment shown in FIG. 7, a resource registration solution is described from the perspective of the first resource server. The resource registration procedure shown in FIG. 7 is applicable to each resource server in the system architecture shown in FIG. 3. For ease of understanding and description rather than limitation, in the embodiments shown in FIG. 4 and FIG. 5, a resource query solution is described from the perspective of the first resource server. The resource query solution is applicable to each resource server in the system structure shown in FIG. 3.

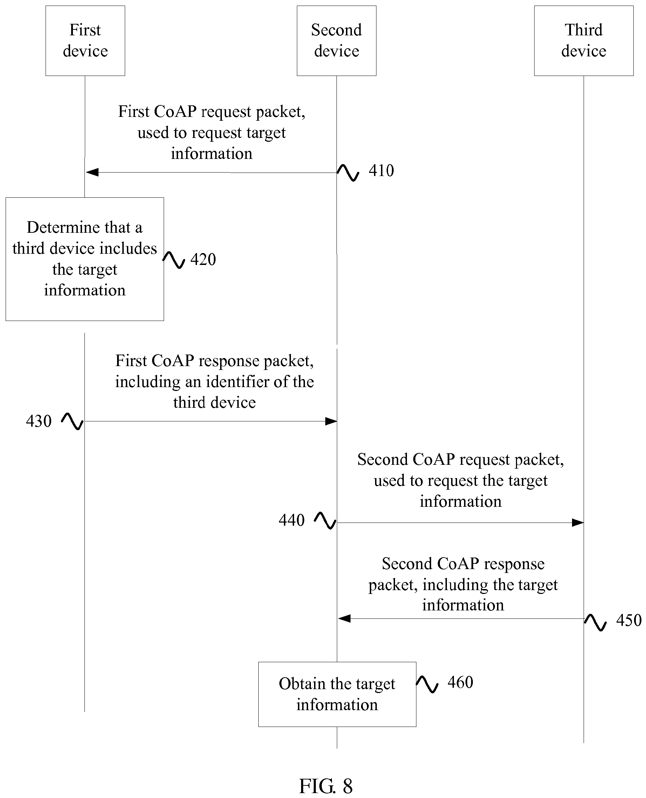

FIG. 8 is a schematic flowchart of a communication method according to another embodiment of this application. The communication method includes the following steps.

410: A second device sends a first Constrained Application Protocol CoAP request packet to a first device, where the first CoAP request packet is used to request target information.

Specifically, the target information may be resource information, or may be device rights information, or may be any information in the Internet of Things that needs to be exchanged.

For example, when the target information is resource information, the first CoAP request packet includes a resource identifier used to indicate the resource information.

420: The first device receives the first CoAP request packet sent by the second device, and determines that a third device includes the target information requested by the second device.

430: The first device sends a first CoAP response packet to the second device, where the first CoAP response packet includes an identifier of the third device, and the first CoAP response packet is used to indicate that the target information is stored in the third device.

440: The second device sends, to the third device based on the identifier of the third device, a second CoAP request packet used to request the target information.

450: The third device sends a second CoAP response packet to the second device, where the second CoAP response packet includes the target information.

460: The second device obtains the target information based on the second CoAP response packet.

In this embodiment of the present application, after receiving the CoAP request packet that is sent by the second device and that is used to request the target information, the first device sends, to the second device, the CoAP response packet including the identifier of the third device, to indicate that the target information is stored in the third device, so that the second device obtains the required target information by using the third device. Therefore, information obtaining efficiency can be improved.

It should be understood that a packet format of a CoAP packet included in this embodiment is shown in FIG. 6. For a CoAP request packet, a Code field is represented in a 0.XX form.

Optionally, in an embodiment, in step 430 in the embodiment shown in FIG. 8, the first CoAP response packet sent by the first device to the second device includes a Code field, and the Code field is used to indicate that a packet type of the first CoAP response packet is a redirection response packet.

Specifically, the Code field in the first CoAP response packet is represented in a 3.XX format, where XX indicates a redirection response cause.

Optionally, in an embodiment, in step 420 in the embodiment shown in FIG. 8, the first device determines that the target information is migrated to the third device, or the first device determines that a replica of the target information is stored in the third device, or the first device determines that the third device is a proxy access device of the target information.

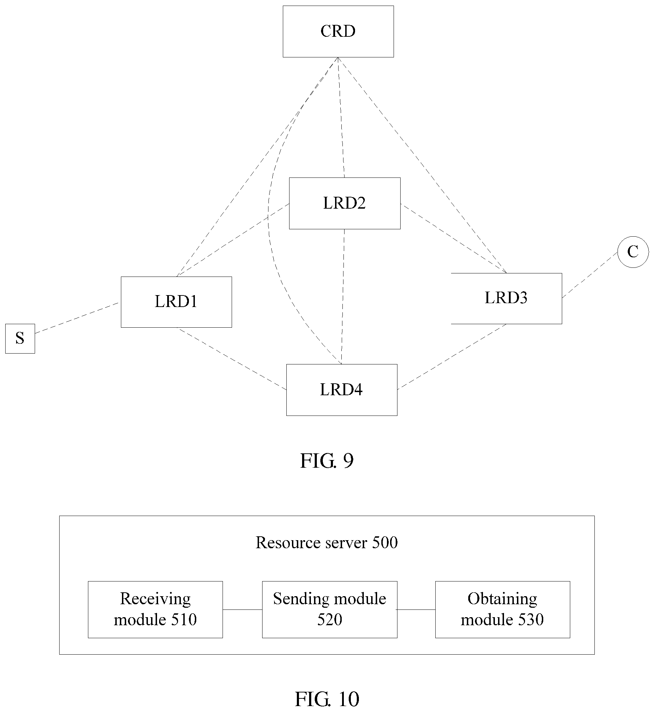

FIG. 9 is a schematic diagram of another application scenario according to an embodiment of the present application. The application scenario is a household scenario. S indicates a light intensity sensor (corresponding to the sensor node in the foregoing embodiments) on a window that can detect light intensity. C indicates a client device, such as a mobile phone. LRD1 to LRD4 are four local resource servers (corresponding to the resource servers in the foregoing embodiments) in four different locations, and separately maintain a bitmap. A URI (corresponding to the resource identifier in the foregoing embodiments) is mapped to a bit through hashing. If the bit is marked as 1, it indicates that resource information corresponding to the URI is stored locally; otherwise, it indicates that resource information corresponding to the URI is not stored locally. CRD indicates a centralized redirection device (corresponding to the centralized redirector in the foregoing embodiments), such as a home gateway. The CRD maintains a URI and LRD address mapping table. A corresponding entry may be located by performing hashing on a URI.

Resource discovery steps are as follows:
Step 1: After startup, the S sends a light intensity detection service registration request to the LRD1, where the request includes service information and a URI.
Step 2: The LRD1 performs hashing on the URI and then performs a modulo operation on the URI and an integer K, to obtain a location P in a bitmap, where a bit that the P is directed to is not set to 1. The LRD1 stores the service information, and sets the bit in the location P in the bitmap to 1.
Step 3: The LRD1 sends the URI and an address of the LRD1 to the CRD.
Step 4: The CRD performs hashing on the URI and performs a modulo operation on the URI and an integer L, to obtain a location Q in the URI and LRD1 mapping table; and stores the URI and the address of the LRD to the location corresponding to Q.
Step 5: The CRD sends a success message to the LRD1.
Step 6: The LRD1 sends a success message to the sensor S.
Step 7: The client C sends query request information to the LRD3, where the request includes the URI.
Step 8: The LRD3 queries, by using the URI, a flag bit state corresponding to a local bitmap, where a result is 0; and sends a request to the CRD, where the request includes the URI.
Step 9: The CRD queries the mapping table for the location Q in which the URI is located, to obtain an address of the LRD1.
Step 10: The CRD sends a redirection request to the LRD3, where a redirection address is the address of the LRD1.
Step 11: The LRD3 sends request information to the LRD1, where the request includes the URI.
Step 12: The LRD1 queries light intensity detection service information corresponding to the URI, and sends, to the LRD3, a response including the light intensity detection service information.
Step 13: The LRD3 forwards the response to the client C.

To sum up, in this embodiment of the present application, the centralized redirector stores a mapping relationship between a resource identifier and an identifier of a resource server in which resource information corresponding to the resource identifier is located, so that a resource server can obtain resource information required by a client by using the centralized redirector if the resource information required by the client is not stored. Therefore, resource discovery efficiency can be effectively improved.

It should be further understood that various numerical symbols included in this specification are merely used for differentiation for ease of description, and are not used to limit the scope of the embodiments of the present application.

FIG. 10 is a schematic block diagram of a resource server 500 according to an embodiment of the present application. The resource server 500 includes:
a receiving module 510, configured to receive a first request packet sent by a client, where the first request packet includes a first resource identifier, and the first request packet is used to request resource information corresponding to the first resource identifier;
a sending module 520, configured to send a second request packet to a centralized redirector when the resource information corresponding to the first resource identifier is not stored, where the second request packet includes the first resource identifier, the centralized redirector stores mapping information, and the mapping information is used to indicate a mapping relationship between a resource identifier and an identifier of a resource server in which resource information corresponding to the resource identifier is located, where
the receiving module 510 is further configured to receive a second response packet sent by the centralized redirector, where the second response packet is used to indicate a second resource server in which the resource information corresponding to the first resource identifier is located; and
an obtaining module 530, configured to obtain, based on the second response packet and by using the second resource server, the resource information corresponding to the first resource identifier, where
the sending module 520 is further configured to send a first response packet to the client, where the first response packet includes the resource information corresponding to the first resource identifier.

In this embodiment of the present application, the centralized redirector stores the mapping relationship between a resource identifier and an identifier of a resource server in which resource information corresponding to the resource identifier is located, so that a resource server can obtain the resource information required by the client by using the centralized redirector if the resource information required by the client is not stored. Therefore, resource discovery efficiency can be effectively improved.

Optionally, in an embodiment, the second response packet includes an identifier of the second resource server, and the obtaining module 530 is further configured to: send a third request packet to the second resource server based on the identifier of the second resource server, where the third request packet includes the first resource identifier; receive a third response packet sent by the second resource server, where the third response packet includes the resource information corresponding to the first resource identifier; and obtain, based on the third response packet, the resource information corresponding to the first resource identifier.

Optionally, in an embodiment, the second response packet includes a Code field, and the Code field is used to indicate that a packet type of the second response packet is a redirection response packet.

Optionally, in an embodiment, the Code field is represented in a 3.xx format.

Optionally, in an embodiment, the sending module 520 is further configured to: perform a hash operation on the first resource identifier, to obtain a bit of the first resource identifier mapped in a bitmap; and when the bit of the first resource identifier mapped to the bitmap is not marked as locally stored, send the second request packet to the centralized redirector, where that the bit is not marked as locally stored indicates that the resource information corresponding to the first resource identifier is not stored in the first resource server.

Optionally, in an embodiment, the receiving module 510 is further configured to receive a resource registration packet sent by a sensor node, where the resource registration packet includes a second resource identifier and resource information corresponding to the second resource identifier, and the resource registration packet is used to request to register the resource information corresponding to the second resource identifier.

The resource server 500 further includes:
a storage module 540, configured to store the second resource identifier and the resource information corresponding to the second resource identifier, where
the sending module 520 is further configured to send the second resource identifier and an identifier of the resource server to the centralized redirector, so that the centralized redirector stores, to the mapping information, a mapping relationship between the second resource identifier and the identifier of the resource server.

It should be noted that, in this embodiment of the present application, the obtaining module 530 may be implemented by a processor or a processor circuit component. Specifically, for example, the processor calls an instruction in a software protocol stack, and when the instruction is executed, a function of the obtaining module 530 can be implemented. The receiving module 510 may be implemented by a receiver, or a circuit component having a receiving function. The sending module 520 may be implemented by a transmitter, or a circuit component having a sending function.

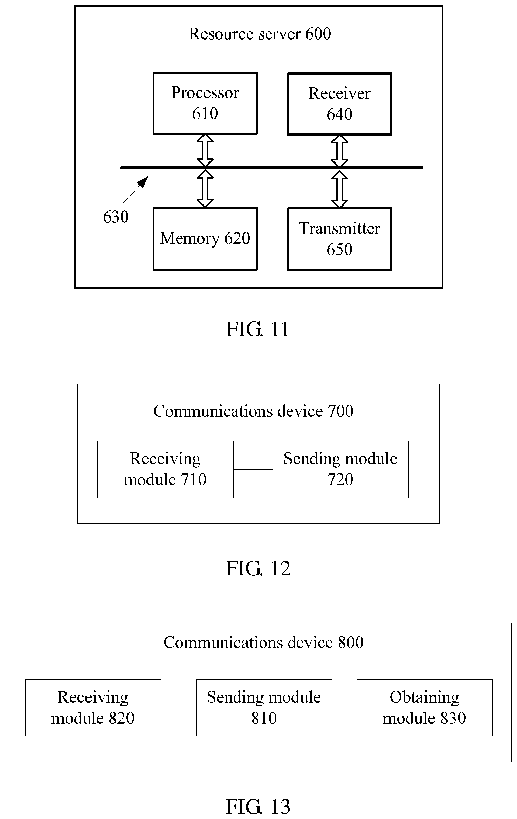

As shown in FIG. 11, a resource server 600 may include a processor 610, a memory 620, a bus system 630, a receiver 640, and a transmitter 650. The memory 620 is configured to store an instruction. The processor 610 reads the instruction stored in the memory 620 to control the receiver 640 to receive a signal and/or the transmitter 650 to send a signal. Specifically, the receiver 640 is configured to receive a first request packet sent by a client, where the first request packet includes a first resource identifier, and the first request packet is used to request resource information corresponding to the first resource identifier. The transmitter 650 is configured to send a second request packet to a centralized redirector when the resource information corresponding to the first resource identifier is not stored, where the second request packet includes the first resource identifier, the centralized redirector stores mapping information, and the mapping information is used to indicate a mapping relationship between a resource identifier and an identifier of a resource server in which resource information corresponding to the resource identifier is located. The receiver 640 is configured to receive a second response packet sent by the centralized redirector, where the second response packet is used to indicate a second resource server in which the resource information corresponding to the first resource identifier is located. The processor 610 is configured to obtain, based on the second response packet and by using the second resource server, the resource information corresponding to the first resource identifier. The transmitter 650 is configured to send a first response packet to the client, where the first response packet includes the resource information corresponding to the first resource identifier.

In this embodiment of the present application, the centralized redirector stores the mapping relationship between a resource identifier and an identifier of a resource server in which resource information corresponding to the resource identifier is located, so that a resource server can obtain the resource information required by the client by using the centralized redirector if the resource information required by the client is not stored. Therefore, in this embodiment of the present application, a delay can be effectively reduced, and resource discovery efficiency can be improved.

Optionally, in an embodiment, the second response packet includes an identifier of the second resource server, and that the processor 610 is configured to obtain, based on the second response packet and by using the second resource server, the resource information corresponding to the first resource identifier includes:
the transmitter 650 is configured to send a third request packet to the second resource server based on the identifier of the second resource server, where the third request packet includes the first resource identifier; the receiver 640 is configured to receive a third response packet sent by the second resource server, where the third response packet includes the resource information corresponding to the first resource identifier; and the processor 610 is configured to obtain, based on the third response packet, the resource information corresponding to the first resource identifier.

In this embodiment of the present application, the response packet sent by the centralized redirector to a first resource server carries the identifier of the second resource server in which the resource information corresponding to the first resource identifier is located, and the first resource server obtains, by using the second resource server, the resource information requested by the client. The resource discovery efficiency can be improved.

Optionally, in an embodiment, the second response packet includes a Code field, and the Code field is used to indicate that a packet type of the second response packet is a redirection response packet.

Optionally, in an embodiment, the Code field is represented in a 3.xx format.

Optionally, in an embodiment, that the transmitter 650 is configured to send a second request packet to a centralized redirector when the resource information corresponding to the first resource identifier is not stored includes:
the processor 610 is configured to perform a hash operation on the first resource identifier, to obtain a bit of the first resource identifier mapped in a bitmap; and the transmitter 650 is configured to: when the bit of the first resource identifier mapped to the bitmap is not marked as locally stored, send the second request packet to the centralized redirector, where that the bit is not marked as locally stored indicates that the resource information corresponding to the first resource identifier is not stored in the first resource server.

Optionally, in an embodiment, the receiver 640 is further configured to receive a resource registration packet sent by a sensor node, where the resource registration packet includes a second resource identifier and resource information corresponding to the second resource identifier, and the resource registration packet is used to request to register the resource information corresponding to the second resource identifier. The processor 610 is configured to store the second resource identifier and the resource information corresponding to the second resource identifier. The transmitter 650 is configured to send the second resource identifier and an identifier of the first resource server to the centralized redirector, so that the centralized redirector stores, to the mapping information, a mapping relationship between the second resource identifier and the identifier of the first resource server.

The resource server 500 shown in FIG. 10 or the resource server 600 shown in FIG. 11 is capable of implementing procedures related to the resource server in the foregoing embodiments of FIG. 3 to FIG. 9. To avoid repetition, details are not described herein again.

FIG. 12 is a schematic block diagram of a communications device 700 according to an embodiment of the present application. The communications device 700 includes:
a receiving module 710, configured to receive a Constrained Application Protocol CoAP request packet sent by a second device, where the CoAP request packet is used to request target information; and
a sending module 720, configured to send a CoAP response packet to the second device, where the CoAP response packet includes an identifier of a third device, and the CoAP response packet is used to indicate that the target information is stored in the third device, so that the second device requests the target information from the third device based on the identifier of the third device.

In this embodiment of the present application, after receiving the CoAP request packet that is sent by the second device and that is used to request the target information, the first device sends, to the second device, the CoAP response packet including the identifier of the third device, to indicate that the target information is stored in the third device, so that the second device obtains the required target information by using the third device. Therefore, information obtaining efficiency can be improved.

Optionally, in an embodiment, the CoAP response packet includes a Code field, and the Code field is used to indicate that a packet type of the CoAP response packet is a redirection response packet.

Optionally, in an embodiment, the Code field is represented in a 3.xx format.

Optionally, in an embodiment, the communications device 700 further includes:
a determining module 730, configured to: before the sending module sends the CoAP response packet to the second device, determine that the target information is migrated to the third device; or determine that a replica of the target information is stored in the third device; or determine that the third device is a proxy access device of the target information.

It should be understood that the determining module 730 may be implemented by a processor or a processor circuit component. Specifically, for example, the processor calls an instruction in a software protocol stack, and when the instruction is executed, a function of the determining module 730 can be implemented. The receiving module 710 may be implemented by a receiver, or a circuit component having a receiving function. The sending module 720 may be implemented by a transmitter, or a circuit component having a sending function.

The communications device 700 shown in FIG. 12 is capable of implementing procedures related to the first device in the foregoing embodiments of FIG. 3 to FIG. 9. To avoid repetition, details are not described herein again.

An embodiment of the present application further provides a communications device. The communications device is capable of implementing procedures related to the first device in the foregoing embodiments of FIG. 3 to FIG. 9. To avoid repetition, details are not described herein again. The communications device may be further corresponding to the communications device 700 in the embodiment of the present application. Specifically, referring to FIG. 11, the communications device may include a processor, a memory, a bus system, a receiver, and a transmitter. The memory is configured to store an instruction. The processor reads the instruction stored in the memory to control the transmitter to send a signal and/or the receiver to receive a signal. Specifically, the receiver is configured to receive a Constrained Application Protocol CoAP request packet sent by a second device, where the CoAP request packet is used to request target information; and the transmitter is configured to send a CoAP response packet to the second device, where the CoAP response packet includes an identifier of a third device, and the CoAP response packet is used to indicate that the target information is stored in the third device, so that the second device requests the target information from the third device based on the identifier of the third device.

In this embodiment of the present application, after receiving the CoAP request packet that is sent by the second device and that is used to request the target information, the first device sends, to the second device, the CoAP response packet including the identifier of the third device, to indicate that the target information is stored in the third device, so that the second device obtains the required target information by using the third device. Therefore, information obtaining efficiency can be improved.

Optionally, in an embodiment, the CoAP response packet includes a Code field, and the Code field is used to indicate that a packet type of the CoAP response packet is a redirection response packet.

Optionally, in an embodiment, the Code field is represented in a 3.xx format.

Optionally, in an embodiment, the processor is configured to: before the transmitter sends the CoAP response packet to the second device, determine that the target information is migrated to the third device; or determine that a replica of the target information is stored in the third device; or determine that the third device is a proxy access device of the target information.

FIG. 13 is a schematic block diagram of a communications device 800 according to an embodiment of the present application. The communications device 800 includes:
a sending module 810, configured to send a first Constrained Application Protocol CoAP request packet to a first device, where the first CoAP request packet is used to request target information;
a receiving module 820, configured to receive a first CoAP response packet sent by the first device, where the first CoAP response packet includes an identifier of a third device, and the first CoAP response packet is used to indicate that the target information is stored in the third device, where
the sending module 810 is further configured to send, to the third device based on the identifier of the third device, a second CoAP request packet used to request the target information; and
the receiving module 820 is further configured to receive a second CoAP response packet sent by the third device, where the second CoAP response packet includes the target information; and
an obtaining module 830, configured to obtain the target information based on the second CoAP response packet.

In this embodiment of the present application, after receiving the CoAP request packet that is sent by the second device and that is used to request the target information, the first device sends, to the second device, the CoAP response packet including the identifier of the third device, to indicate that the target information is stored in the third device, so that the second device obtains the required target information by using the third device. Therefore, information obtaining efficiency can be improved.

Optionally, in an embodiment, the CoAP response packet includes a Code field, and the Code field is used to indicate that a packet type of the CoAP response packet is a redirection response packet.

Optionally, in an embodiment, the Code field is represented in a 3.xx format.

It should be understood that the obtaining module 830 may be implemented by a processor or a processor circuit component. Specifically, for example, the processor calls an instruction in a software protocol stack, and when the instruction is executed, a function of the obtaining module 830 can be implemented. The receiving module 820 may be implemented by a receiver, or a circuit component having a receiving function. The sending module 810 may be implemented by a transmitter, or a circuit component having a sending function.

An embodiment of the present application further provides a communications device. The communications device is capable of implementing procedures related to the second device in the foregoing embodiments of FIG. 3 to FIG. 9. To avoid repetition, details are not described herein again. The communications device may be further corresponding to the communications device 800 in the embodiment of the present application. Specifically, referring to FIG. 11, the communications device may include a processor, a memory, a bus system, a receiver, and a transmitter. The memory is configured to store an instruction. The processor reads the instruction stored in the memory to control the transmitter to send a signal and/or the receiver to receive a signal. Specifically, the transmitter is configured to send a first Constrained Application Protocol CoAP request packet to a first device, where the first CoAP request packet is used to request target information; the receiver is configured to receive a first CoAP response packet sent by the first device, where the first CoAP response packet includes an identifier of a third device, and the first CoAP response packet is used to indicate that the target information is stored in the third device; the transmitter is configured to send, to the third device based on the identifier of the third device, a second CoAP request packet used to request the target information; the receiver is configured to receive a second CoAP response packet sent by the third device, where the second CoAP response packet includes the target information; and the processor is configured to obtain the target information based on the second CoAP response packet.

In this embodiment of the present application, after receiving the CoAP request packet that is sent by the second device and that is used to request the target information, the first device sends, to the second device, the CoAP response packet including the identifier of the third device, to indicate that the target information is stored in the third device, so that the second device obtains the required target information by using the third device. Therefore, information obtaining efficiency can be improved.

Optionally, in an embodiment, the first CoAP response packet includes a Code field, and the Code field is used to indicate that a packet type of the first CoAP response packet is a redirection response packet.

Optionally, in an embodiment, the Code field is represented in a 3.xx format.

It should be understood that, in the embodiments of the present application, the processor may be a central processing unit (Central Processing Unit, "CPU" for short), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general purpose processor may be a microprocessor, or the processor may be any conventional processor or the like.

It should be further understood that, in the embodiments of the present application, the memory may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus dynamic random access memory (Direct Rambus RAM, DR RAM).

It should be noted that, when the processor is a general purpose processor, a DSP, an ASIC, an FPGA or another programmable logic device, a discrete gate or transistor logic device, or a discrete hardware component, the memory (the storage module) is integrated in the processor.

It should be noted that the memory of the systems and methods described in this specification includes but is not limited to these and any memory of another proper type.

It should be further understood that, in the embodiments of the present application, the bus system may further include a power bus, a control bus, a status signal bus, and the like, in addition to a data bus. However, for clarity of description, various types of buses in FIG. 11 are marked as the bus system.

In an implementation process, steps in the foregoing methods can be implemented by using a hardware integrated logic circuit in the processor, or by using instructions in a form of software. The steps of the methods disclosed with reference to the embodiments of the present application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and performs the steps in the foregoing methods in combination with hardware of the processor. To avoid repetition, details are not described herein again.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of the present application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts shown as units may or may not be physical units, may be located in one position, or may be distributed on a plurality of network units. Some or all of the units may be selected depending on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communications system, comprising a centralized redirector (110), a plurality of resource servers (120a-120d), and a client (130a-130d), wherein the centralized redirector stores mapping information, and the mapping information is used to indicate a mapping relationship between a resource identifier and an identifier of a resource server in which resource information corresponding to the resource identifier is located;
the client is configured to send (210) a first request packet to a first resource server in the plurality of resource servers, wherein the first request packet comprises a first resource identifier, and the first request packet is used to request resource information corresponding to the first resource identifier;
the first resource server is configured to send (240) a second request packet to the centralized redirector when the resource information corresponding to the first resource identifier is not stored in the first resource server (220), wherein the second request packet comprises the first resource identifier;
the centralized redirector is configured to send (260) a second response packet to the first resource server based on the first resource identifier and the mapping information, wherein the second response packet is used to indicate a second resource server in which the resource information corresponding to the first resource identifier is located, wherein the centralized redirector is configured to obtain (250), based on the mapping information, an identifier of the second resource server that is in a mapping relationship with the first resource identifier; and send the second response packet to the first resource server, wherein the second response packet comprises the identifier of the second resource server;
the first resource server is further configured to: obtain (270), from the second resource server, the resource information corresponding to the first resource identifier; and send a first response packet to the client, wherein the first response packet comprises the resource information corresponding to the first resource identifier; and
wherein in the aspect of obtaining, from the second resource server, the resource information corresponding to the first resource identifier, the first resource server is configured to send (270)
a third request packet to the second resource server based on the identifier of the second resource server, wherein the third request packet comprises the first resource identifier; the second resource server is configured to send a third response packet to the first resource server, wherein the third response packet comprises the resource information corresponding to the first resource identifier; and the first resource server is configured to obtain, based on the third response packet, the resource information corresponding to the first resource identifier.

2. The communications system according to claim 1, wherein the second response packet comprises a Code field, and the Code field is used to indicate that a packet type of the second response packet is a redirection response packet.

3. A communication method, comprising:
receiving, by a first resource server, a first request packet sent by a client, wherein the first request packet comprises a first resource identifier, and the first request packet is used to request resource information corresponding to the first resource identifier;
sending, by the first resource server, a second request packet to a centralized redirector when the resource information corresponding to the first resource identifier is not stored, wherein the second request packet comprises the first resource identifier, the centralized redirector stores mapping information, and the mapping information is used to indicate a mapping relationship between a resource identifier and an identifier of a resource server in which resource information corresponding to the resource identifier is located;
receiving, by the first resource server, a second response packet sent by the centralized redirector, wherein the second response packet is used to indicate a second resource server in which the resource information corresponding to the first resource identifier is located;
obtaining, by the first resource server based on the second response packet and by using the second resource server, the resource information corresponding to the first resource identifier;
sending, by the first resource server, a first response packet to the client, wherein the first response packet comprises the resource information corresponding to the first resource identifier;
wherein a centralized redirector is configured to obtain (250), based on the mapping information, an identifier of the second resource server that is in a mapping relationship with the first resource identifier; and send the second response packet to the first resource server, wherein the second response packet comprises the identifier of the second resource server; and
wherein the second response packet comprises an identifier of the second resource server, and the obtaining step comprises:
sending, by the first resource server, a third request packet to the second resource server based on the identifier of the second resource server, wherein the third request packet comprises the first resource identifier;
receiving, by the first resource server, a third response packet sent by the second resource server, wherein the third response packet comprises the resource information corresponding to the first resource identifier; and
obtaining, by the first resource server based on the third response packet, the resource information corresponding to the first resource identifier.

4. The communication method according to claim 3, wherein the second response packet comprises a Code field, and the Code field is used to indicate that a packet type of the second response packet is a redirection response packet.

5. The communication method according to claim 4, wherein the Code field is represented in a 3.xx format.

6. The communications method according to any one of claims 3 to 5, wherein the sending, by the first resource server, a second request packet to a centralized redirector when the resource information corresponding to the first resource identifier is not stored comprises:
performing, by the first resource server, a hash operation on the first resource identifier, to obtain a bit of the first resource identifier mapped in a bitmap; and
sending, by the first resource server, the second request packet to the centralized redirector when the bit of the first resource identifier mapped to the bitmap is not marked as locally stored, wherein that the bit is not marked as locally stored indicates that the resource information corresponding to the first resource identifier is not stored in the first resource server.

7. The communication method according to any one of claims 3 to 6, wherein the communication method further comprises:
receiving, by the first resource server, a resource registration packet sent (310) by a sensor node, wherein the resource registration packet comprises a second resource identifier and resource information corresponding to the second resource identifier, and the resource registration packet is used to request to register the resource information corresponding to the second resource identifier;
storing (320), by the first resource server, the second resource identifier and the resource information corresponding to the second resource identifier; and
sending (330), by the first resource server, the second resource identifier and an identifier of the first resource server to the centralized redirector, so that the centralized redirector stores, to the mapping information, a mapping relationship between the second resource identifier and the identifier of the first resource server.

8. A resource server (500) for a communications system, wherein the communications system comprising a centralized redirector (110) which stores mapping information, and the mapping information is used to indicate a mapping relationship between a resource identifier and an identifier of a resource server in which resource information corresponding to the resource identifier is located, comprising:
a receiving module (510), configured to receive a first request packet sent by a client, wherein the first request packet comprises a first resource identifier, and the first request packet is used to request resource information corresponding to the first resource identifier;
a sending module (520), configured to send a second request packet to a centralized redirector when the resource information corresponding to the first resource identifier is not stored, wherein the second request packet comprises the first resource identifier, the centralized redirector stores mapping information, and the mapping information is used to indicate a mapping relationship between a resource identifier and an identifier of a resource server in which resource information corresponding to the resource identifier is located, wherein
the receiving module (510), is further configured to receive a second response packet sent by the centralized redirector, wherein the second response packet is used to indicate a second resource server in which the resource information corresponding to the first resource identifier is located; and
an obtaining module (530), configured to obtain, based on the second response packet and by using the second resource server, the resource information corresponding to the first resource identifier, wherein
the sending module (520) is further configured to send a first response packet to the client, wherein the first response packet comprises the resource information corresponding to the first resource identifier; and
wherein the second response packet comprises an identifier of the second resource server, and the obtaining module is further configured to: send a third request packet to the second resource server based on the identifier of the second resource server, wherein the third request packet comprises the first resource identifier; receive a third response packet sent by the second resource server, wherein the third response packet comprises the resource information corresponding to the first resource identifier; and obtain, based on the third response packet, the resource information corresponding to the first resource identifier.

9. The resource server according to claim 8, wherein the second response packet comprises a Code field, and the Code field is used to indicate that a packet type of the second response packet is a redirection response packet.

10. A computer program product comprising computer program instructions that when executed by a processing apparatus cause the processing apparatus to perform the method according to any of the preceding claims 3 to 7.

11. A non-transitory computer-readable medium storing computer instructions for communications, that when executed by one or more processors, cause the one or more processors to perform the method of claim 3 to 7.

## Patentansprüche

1. Kommunikationssystem, umfassend einen zentralisierten Umleiter (110), eine Vielzahl Ressourcenserver (120a-120d) und einen Client (130a-130d), wobei der zentralisierte Umleiter Zuordnungsinformationen speichert und die Zuordnungsinformationen verwendet werden, um eine Zuordnungsbeziehung zwischen einer Ressourcenkennung und einer Kennung eines Ressourcenservers, in dem sich Ressourceninformationen, die der Ressourcenkennung entsprechen, befinden, anzuzeigen;
der Client dazu konfiguriert ist, ein erstes Anforderungspaket an einen ersten Ressourcenserver in der Vielzahl Ressourcenserver zu senden (210), wobei das erste Anforderungspaket eine erste Ressourcenkennung umfasst und das erste Anforderungspaket dazu verwendet wird, Ressourceninformationen, die der ersten Ressourcenkennung entsprechen, anzufordern;
der erste Ressourcenserver dazu konfiguriert ist, ein zweites Anforderungspaket an den zentralisierten Umleiter zu senden (240), wenn die Ressourceninformationen, die der ersten Ressourcenkennung entsprechen, nicht in dem ersten Ressourcenserver (220) gespeichert sind, wobei das zweite Anforderungspaket die erste Ressourcenkennung umfasst;
der zentralisierte Umleiter dazu konfiguriert ist, basierend auf der ersten Ressourcenkennung und den Zuordnungsinformationen ein zweites Antwortpaket an den ersten Ressourcenserver zu senden (260), wobei das zweite Antwortpaket dazu verwendet wird, einen zweiten Ressourcenserver anzuzeigen, in dem sich die Ressourceninformationen, die der ersten Ressourcenkennung entsprechen, befinden, wobei der zentralisierte Umleiter dazu konfiguriert ist, basierend auf den Zuordnungsinformationen eine Kennung des zweiten Ressourcenservers, der in einer Zuordnungsbeziehung mit der ersten Ressourcenkennung steht, zu erlangen (250); und das zweite Antwortpaket an den ersten Ressourcenserver zu senden, wobei das zweite Antwortpaket die Kennung des zweiten Ressourcenservers umfasst;
der erste Ressourcenserver ferner zu Folgendem konfiguriert ist: Erlangen (270), von dem zweiten Ressourcenserver, der Ressourceninformationen, die der ersten Ressourcenkennung entsprechen; und Senden eines ersten Antwortpakets an den Client, wobei das erste Antwortpaket die Ressourceninformationen, die der ersten Ressourcenkennung entsprechen, umfasst; und
wobei beim Aspekt des Erlangens, von dem zweiten Ressourcenserver, der Ressourceninformationen, die der ersten Ressourcenkennung entsprechen, der erste Ressourcenserver dazu konfiguriert ist, basierend auf der Kennung des zweiten Ressourcenservers ein drittes Anforderungspaket an den zweiten Ressourcenserver zu senden (270), wobei das dritte Anforderungspaket die erste Ressourcenkennung umfasst; der zweite Ressourcenserver dazu konfiguriert ist, ein drittes Antwortpaket an den ersten Ressourcenserver zu senden, wobei das dritte Antwortpaket die Ressourceninformationen, die der ersten Ressourcenkennung entsprechen, umfasst; und der erste Ressourcenserver dazu konfiguriert ist, basierend auf dem dritten Antwortpaket die Ressourceninformationen, die der ersten Ressourcenkennung entsprechen, zu erlangen.

2. Kommunikationssystem nach Anspruch 1, wobei das zweite Antwortpaket ein Codefeld umfasst und das Codefeld verwendet wird, um anzuzeigen, dass ein Pakettyp des zweiten Antwortpakets ein Umleitungsantwortpaket ist.

3. Kommunikationsverfahren, umfassend:
Empfangen, durch einen ersten Ressourcenserver, eines ersten Anforderungspakets, das von einem Client gesendet wird, wobei das erste Anforderungspaket eine erste Ressourcenkennung umfasst und das erste Anforderungspaket dazu verwendet wird, Ressourceninformationen, die der ersten Ressourcenkennung entsprechen, anzufordern;
Senden, durch den ersten Ressourcenserver, eines zweiten Anforderungspakets an einen zentralisierten Umleiter, wenn die Ressourceninformationen, die der ersten Ressourcenkennung entsprechen, nicht gespeichert sind, wobei das zweite Anforderungspaket die erste Ressourcenkennung umfasst, der zentralisierte Umleiter Zuordnungsinformationen speichert und die Zuordnungsinformationen verwendet werden, um eine Zuordnungsbeziehung zwischen einer Ressourcenkennung und einer Kennung eines Ressourcenservers, in dem sich die Ressourceninformationen, die der Ressourcenkennung entsprechen, befinden, anzuzeigen;
Empfangen, durch den ersten Ressourcenserver, eines zweiten Antwortpakets, das von dem zentralisierten Umleiter gesendet wird, wobei das zweite Antwortpaket dazu verwendet wird, einen zweiten Ressourcenserver anzuzeigen, in dem sich die Ressourceninformationen, die der ersten Ressourcenkennung entsprechen, befinden;
Erlangen, durch den ersten Ressourcenserver, der Ressourceninformationen, die der ersten Ressourcenkennung entsprechen, basierend auf dem zweiten Antwortpaket und unter Verwendung des zweiten Ressourcenservers;
Senden, durch den ersten Ressourcenserver, eines ersten Antwortpakets an den Client, wobei das erste Antwortpaket die Ressourceninformationen, die der ersten Ressourcenkennung entsprechen, umfasst;
wobei ein zentralisierter Umleiter dazu konfiguriert ist, basierend auf den Zuordnungsinformationen eine Kennung des zweiten Ressourcenservers, der in einer Zuordnungsbeziehung mit der ersten Ressourcenkennung steht, zu erlangen (250); und das zweite Antwortpaket an den ersten Ressourcenserver zu senden, wobei das zweite Antwortpaket die Kennung des zweiten Ressourcenservers umfasst; und
wobei das zweite Antwortpaket eine Kennung des zweiten Ressourcenservers umfasst und der Schritt des Erlangens Folgendes umfasst:
Senden, durch den ersten Ressourcenserver, eines dritten Anforderungspakets an den zweiten Ressourcenserver basierend auf der Kennung des zweiten Ressourcenservers, wobei das dritte Anforderungspaket die erste Ressourcenkennung umfasst;
Empfangen, durch den ersten Ressourcenserver, eines dritten Antwortpakets, das von dem zweiten Ressourcenserver gesendet wird, wobei das dritte Antwortpaket die Ressourceninformationen, die der ersten Ressourcenkennung entsprechen, umfasst; und
Erlangen, durch den ersten Ressourcenserver, der Ressourceninformationen, die der ersten Ressourcenkennung entsprechen, basierend auf dem dritten Antwortpaket.

4. Kommunikationsverfahren nach Anspruch 3, wobei das zweite Antwortpaket ein Codefeld umfasst und das Codefeld verwendet wird, um anzuzeigen, dass ein Pakettyp des zweiten Antwortpakets ein Umleitungsantwortpaket ist.

5. Kommunikationsverfahren nach Anspruch 4, wobei das Codefeld in einem 3.xx-Format dargestellt wird.

6. Kommunikationsverfahren nach einem der Ansprüche 3 bis 5, wobei das Senden, durch den ersten Ressourcenserver, eines zweiten Anforderungspakets an einen zentralisierten Umleiter, wenn die Ressourceninformationen, die der ersten Ressourcenkennung entsprechen, nicht gespeichert sind, Folgendes umfasst:
Durchführen, durch den ersten Ressourcenserver, einer Hash-Operation an der ersten Ressourcenkennung, um ein Bit der ersten Ressourcenkennung, das in einer Bitmap zugeordnet ist, zu erlangen; und
Senden, durch den ersten Ressourcenserver, des zweiten Anforderungspakets an den zentralisierten Umleiter, wenn das Bit der ersten Ressourcenkennung, das der Bitmap zugeordnet ist, nicht als lokal gespeichert markiert ist, wobei die Tatsache, dass das Bit nicht als lokal gespeichert markiert ist, anzeigt, dass die Ressourceninformationen, die der ersten Ressourcenkennung entsprechen, nicht in dem ersten Ressourcenserver gespeichert sind.

7. Kommunikationsverfahren nach einem der Ansprüche 3 bis 6, wobei das Kommunikationsverfahren ferner Folgendes umfasst:
Empfangen, durch den ersten Ressourcenserver, eines Ressourcenregistrierungspakets (310), das von einem Sensorknoten gesendet wird, wobei das Ressourcenregistrierungspaket eine zweite Ressourcenkennung und Ressourceninformationen, die der zweiten Ressourcenkennung entsprechen, umfasst und das Ressourcenregistrierungspaket verwendet wird, um anzufordern, dass die Ressourceninformationen, die der zweiten Ressourcenkennung entsprechen, registriert werden;
Speichern (320), durch den ersten Ressourcenserver, der zweiten Ressourcenkennung und der Ressourceninformationen, die der zweiten Ressourcenkennung entsprechen; und
Senden (330), durch den ersten Ressourcenserver, der zweiten Ressourcenkennung und einer Kennung des ersten Ressourcenservers an den zentralisierten Umleiter, so dass der zentralisierte Umleiter in den Zuordnungsinformationen eine Zuordnungsbeziehung zwischen der zweiten Ressourcenkennung und der Kennung des ersten Ressourcenservers speichert.

8. Ressourcenserver (500) für ein Kommunikationssystem, wobei das Kommunikationssystem einen zentralisierten Umleiter (110) umfasst, der Zuordnungsinformationen speichert, und die Zuordnungsinformationen verwendet werden, um eine Zuordnungsbeziehung zwischen einer Ressourcenkennung und einer Kennung eines Ressourcenservers anzuzeigen, in dem sich Ressourceninformationen befinden, die der Ressourcenkennung entsprechen, umfassend:
ein Empfangsmodul (510), das dazu konfiguriert ist, ein erstes Anforderungspaket, das von einem Client gesendet wird, zu empfangen, wobei das erste Anforderungspaket eine erste Ressourcenkennung umfasst und das erste Anforderungspaket dazu verwendet wird, Ressourceninformationen, die der ersten Ressourcenkennung entsprechen, anzufordern;
ein Sendemodul (520), das dazu konfiguriert ist, ein zweites Anforderungspaket an einen zentralisierten Umleiter zu senden, wenn die Ressourceninformationen, die der ersten Ressourcenkennung entsprechen, nicht gespeichert sind, wobei das zweite Anforderungspaket die erste Ressourcenkennung umfasst, der zentralisierte Umleiter Zuordnungsinformationen speichert und die Zuordnungsinformationen verwendet werden, um eine Zuordnungsbeziehung zwischen einer Ressourcenkennung und einer Kennung eines Ressourcenservers, in dem sich die Ressourceninformationen, die der Ressourcenkennung entsprechen, befinden, anzuzeigen, wobei
das Empfangsmodul (510) ferner dazu konfiguriert ist, ein zweites Antwortpaket, das von dem zentralisierten Umleiter gesendet wird, zu empfangen, wobei das zweite Antwortpaket dazu verwendet wird, einen zweiten Ressourcenserver anzuzeigen, in dem sich die Ressourceninformationen, die der ersten Ressourcenkennung entsprechen, befinden; und
ein Erlangungsmodul (530), das dazu konfiguriert ist, basierend auf dem zweiten Antwortpaket und unter Verwendung des zweiten Ressourcenservers, die Ressourceninformationen, die der ersten Ressourcenkennung entsprechen, zu erlangen, wobei
das Sendemodul (520) ferner dazu konfiguriert ist, ein erstes Antwortpaket an den Client zu senden, wobei das erste Antwortpaket die Ressourceninformationen, die der ersten Ressourcenkennung entsprechen, umfasst; und
wobei das zweite Antwortpaket eine Kennung des zweiten Ressourcenservers umfasst und das Erlangungsmodul ferner zu Folgendem konfiguriert ist: Senden eines dritten Anforderungspakets an den zweiten Ressourcenserver basierend auf der Kennung des zweiten Ressourcenservers, wobei das dritte Anforderungspaket die erste Ressourcenkennung umfasst; Empfangen eines dritten Antwortpakets, das von dem zweiten Ressourcenserver gesendet wird, wobei das dritte Antwortpaket die Ressourceninformationen, die der ersten Ressourcenkennung entsprechen, umfasst; und Erlangen, basierend auf dem dritten Antwortpaket, der Ressourceninformationen, die der ersten Ressourcenkennung entsprechen.

9. Ressourcenserver nach Anspruch 8, wobei das zweite Antwortpaket ein Codefeld umfasst und das Codefeld verwendet wird, um anzuzeigen, dass ein Pakettyp des zweiten Antwortpakets ein Umleitungsantwortpaket ist.

10. Computerprogrammprodukt, umfassend Computerprogrammanweisungen, die, wenn sie von einer Verarbeitungseinrichtung ausgeführt werden, die Verarbeitungseinrichtung dazu veranlassen, das Verfahren nach einem der vorhergehenden Ansprüche 3 bis 7 durchzuführen.

11. Nicht-flüchtiges, computerlesbares Speichermedium, das Computeranweisungen für Kommunikation speichert, die, wenn sie durch einen oder mehrere Prozessoren ausgeführt werden, den einen oder die mehreren Prozessoren dazu veranlassen, das Verfahren nach den Ansprüchen 3 bis 7 durchzuführen.

## Revendications

1. Système de communication, comprenant un redirecteur centralisé (110), une pluralité de serveurs de ressources (120a à 120d) et un client (130a à 130d), dans lequel le redirecteur centralisé stocke des informations de mappage, et les informations de mappage sont utilisées pour indiquer une relation de mappage entre un identifiant de ressource et un identifiant d'un serveur de ressources dans lequel se trouvent des informations de ressources correspondant à l'identifiant de ressource ;
le client est configuré pour envoyer (210) un premier paquet de demandes à un premier serveur de ressources dans la pluralité de serveurs de ressources, dans lequel le premier paquet de demandes comprend un premier identifiant de ressource, et le premier paquet de demandes est utilisé pour demander des informations de ressources correspondant au premier identifiant de ressource ;
le premier serveur de ressources est configuré pour envoyer (240) un deuxième paquet de demandes au redirecteur centralisé lorsque les informations de ressources correspondant au premier identifiant de ressource ne sont pas stockées dans le premier serveur de ressources (220), dans lequel le deuxième paquet de demandes comprend le premier identifiant de ressource ;
le redirecteur centralisé est configuré pour envoyer (260) un deuxième paquet de réponses au premier serveur de ressources sur la base du premier identifiant de ressource et des informations de mappage, dans lequel le deuxième paquet de réponses est utilisé pour indiquer un second serveur de ressources dans lequel se trouvent les informations de ressources correspondant au premier identifiant de ressource, dans lequel le redirecteur centralisé est configuré pour obtenir (250), sur la base des informations de mappage, un identifiant du second serveur de ressources qui est dans une relation de mappage avec le premier identifiant de ressource ; et envoyer le deuxième paquet de réponses au premier serveur de ressources, dans lequel le deuxième paquet de réponses comprend l'identifiant du second serveur de ressources ;
le premier serveur de ressources est également configuré pour :
obtenir (270), à partir du second serveur de ressources, les informations de ressources correspondant au premier identifiant de ressource ; et envoyer un premier paquet de réponses au client, dans lequel le premier paquet de réponses comprend les informations de ressources correspondant au premier identifiant de ressource ; et
dans lequel dans l'aspect d'obtention, à partir du second serveur de ressources, des informations de ressources correspondant au premier identifiant de ressource, le premier serveur de ressources est configuré pour envoyer (270) un troisième paquet de demandes au second serveur de ressources sur la base de l'identifiant du second serveur de ressources, dans lequel le troisième paquet de demandes comprend le premier identifiant de ressource ; le second serveur de ressources est configuré pour envoyer un troisième paquet de réponses au premier serveur de ressources, dans lequel le troisième paquet de réponses comprend les informations de ressources correspondant au premier identifiant de ressource ; et le premier serveur de ressources est configuré pour obtenir, sur la base du troisième paquet de réponses, les informations de ressources correspondant au premier identifiant de ressource.

2. Système de communication selon la revendication 1, dans lequel le deuxième paquet de réponses comprend un champ Code, et le champ Code est utilisé pour indiquer qu'un type de paquet du deuxième paquet de réponses est un paquet de réponses de redirection.

3. Procédé de communication, comprenant :
la réception, par un premier serveur de ressources, d'un premier paquet de demandes envoyé par un client, dans lequel le premier paquet de demandes comprend un premier identifiant de ressource, et le premier paquet de demandes est utilisé pour demander des informations de ressources correspondant au premier identifiant de ressource ;
l'envoi, par le premier serveur de ressources, d'un deuxième paquet de demandes à un redirecteur centralisé lorsque les informations de ressources correspondant au premier identifiant de ressource ne sont pas stockées, dans lequel le deuxième paquet de demandes comprend le premier identifiant de ressource, le redirecteur centralisé stocke des informations de mappage, et les informations de mappage sont utilisées pour indiquer une relation de mappage entre un identifiant de ressource et un identifiant d'un serveur de ressources dans lequel se trouvent des informations de ressources correspondant à l'identifiant de ressource ;
la réception, par le premier serveur de ressources, d'un deuxième paquet de réponses envoyé par le redirecteur centralisé, dans lequel le deuxième paquet de réponses est utilisé pour indiquer un second serveur de ressources dans lequel se trouvent les informations de ressources correspondant au premier identifiant de ressource ;
l'obtention, par le premier serveur de ressources sur la base du deuxième paquet de réponses et à l'aide du second serveur de ressources, des informations de ressources correspondant au premier identifiant de ressource ;
l'envoi, par le premier serveur de ressources, d'un premier paquet de réponses au client, dans lequel le premier paquet de réponses comprend les informations de ressources correspondant au premier identifiant de ressource ;
dans lequel un redirecteur centralisé est configuré pour obtenir (250), sur la base des informations de mappage, un identifiant du second serveur de ressources qui est dans une relation de mappage avec le premier identifiant de ressource ; et envoyer le deuxième paquet de réponses au premier serveur de ressources, dans lequel le deuxième paquet de réponses comprend l'identifiant du second serveur de ressources ; et
dans lequel le deuxième paquet de réponses comprend un identifiant du second serveur de ressources, et l'étape d'obtention comprend :
l'envoi, par le premier serveur de ressources, d'un troisième paquet de demandes au second serveur de ressources sur la base de l'identifiant du second serveur de ressources, dans lequel le troisième paquet de demandes comprend le premier identifiant de ressource ;
la réception, par le premier serveur de ressources, d'un troisième paquet de réponses envoyé par le second serveur de ressources, dans lequel le troisième paquet de réponses comprend les informations de ressources correspondant au premier identifiant de ressource ; et
l'obtention, par le premier serveur de ressources sur la base du troisième paquet de réponses, des informations de ressources correspondant au premier identifiant de ressource.

4. Procédé de communication selon la revendication 3, dans lequel le deuxième paquet de réponses comprend un champ Code, et le champ Code est utilisé pour indiquer qu'un type de paquet du deuxième paquet de réponses est un paquet de réponses de redirection.

5. Procédé de communication selon la revendication 4, dans lequel le champ Code est représenté dans un format 3.xx.

6. Procédé de communication selon l'une quelconque des revendications 3 à 5, dans lequel l'envoi, par le premier serveur de ressources, d'un deuxième paquet de demandes à un redirecteur centralisé lorsque les informations de ressources correspondant au premier identifiant de ressource ne sont pas stockées, comprend :
la réalisation, par le premier serveur de ressources, d'une opération de hachage sur le premier identifiant de ressource, pour obtenir un bit du premier identifiant de ressource mappé dans une bitmap ; et
l'envoi, par le premier serveur de ressources, du deuxième paquet de demande au redirecteur centralisé lorsque le bit du premier identifiant de ressource mappé sur la bitmap n'est pas marqué comme stocké localement, dans lequel le fait que le bit ne soit pas marqué comme stocké localement indique que les informations de ressources correspondant au premier identifiant de ressource ne sont pas stockées dans le premier serveur de ressources.

7. Procédé de communication selon l'une quelconque des revendications 3 à 6, dans lequel le procédé de communication comprend également :
la réception, par le premier serveur de ressources, d'un paquet d'enregistrement de ressources envoyé (310) par un nœud de capteur, dans lequel le paquet d'enregistrement de ressources comprend un second identifiant de ressource et des informations de ressources correspondant au second identifiant de ressource, et le paquet d'enregistrement de ressources est utilisé pour demander l'enregistrement des informations de ressources correspondant au second identifiant de ressource ;
le stockage (320), par le premier serveur de ressources, du second identifiant de ressource et des informations de ressources correspondant au second identifiant de ressource ; et
l'envoi (330), par le premier serveur de ressources, du second identifiant de ressource et d'un identifiant du premier serveur de ressources au redirecteur centralisé, de sorte que le redirecteur centralisé stocke, dans les informations de mappage, une relation de mappage entre le second identifiant de ressource et l'identifiant du premier serveur de ressources.

8. Serveur de ressources (500) pour un système de communication, dans lequel le système de communication comprend un redirecteur centralisé (110) qui stocke des informations de mappage, et les informations de mappage sont utilisées pour indiquer une relation de mappage entre un identifiant de ressource et un identifiant d'un serveur de ressources dans lequel se trouvent des informations de ressources correspondant à l'identifiant de ressource, comprenant :
un module de réception (510), configuré pour recevoir un premier paquet de demandes envoyé par un client, dans lequel le premier paquet de demandes comprend un premier identifiant de ressource, et le premier paquet de demandes est utilisé pour demander des informations de ressources correspondant au premier identifiant de ressource ;
un module d'envoi (520), configuré pour envoyer un deuxième paquet de demandes à un redirecteur centralisé lorsque les informations de ressources correspondant au premier identifiant de ressource ne sont pas stockées, dans lequel le second paquet de demandes comprend le premier identifiant de ressource, le redirecteur centralisé stocke des informations de mappage, et les informations de mappage sont utilisées pour indiquer une relation de mappage entre un identifiant de ressource et un identifiant d'un serveur de ressources dans lequel se trouvent des informations de ressources correspondant à l'identifiant de ressource, dans lequel
le module de réception (510) est également configuré pour recevoir un deuxième paquet de réponses envoyé par le redirecteur centralisé, dans lequel le deuxième paquet de réponses est utilisé pour indiquer un second serveur de ressources dans lequel se trouvent les informations de ressources correspondant au premier identifiant de ressource ; et
un module d'obtention (530), configuré pour obtenir, sur la base du deuxième paquet de réponses et à l'aide du second serveur de ressources, les informations de ressources correspondant au premier identifiant de ressource, dans lequel
le module d'envoi (520) est également configuré pour envoyer un premier paquet de réponses au client, dans lequel le premier paquet de réponses comprend les informations de ressources correspondant au premier identifiant de ressource ; et
dans lequel le deuxième paquet de réponses comprend un identifiant du second serveur de ressources, et le module d'obtention est également configuré pour : envoyer un troisième paquet de demandes au second serveur de ressources sur la base de l'identifiant du second serveur de ressources, dans lequel le troisième paquet de demandes comprend le premier identifiant de ressource ; recevoir un troisième paquet de réponses envoyé par le second serveur de ressources, dans lequel le troisième paquet de réponses comprend les informations de ressources correspondant au premier identifiant de ressource ; et obtenir, sur la base du troisième paquet de réponses, les informations de ressources correspondant au premier identifiant de ressource.

9. Serveur de ressources selon la revendication 8, dans lequel le deuxième paquet de réponses comprend un champ Code, et le champ Code est utilisé pour indiquer qu'un type de paquet du deuxième paquet de réponses est un paquet de réponses de redirection.

10. Produit de programme informatique, comprenant des instructions de programme informatique qui, lorsqu'elles sont exécutées par un appareil de traitement, amènent l'appareil de traitement à réaliser le procédé selon l'une quelconque des revendications précédentes 3 à 7.

11. Support non transitoire lisible par ordinateur stockant des instructions informatiques pour les communications qui, lorsqu'elles sont exécutées par un ou plusieurs processeurs, amènent les un ou plusieurs processeurs à réaliser le procédé selon l'une quelconque des revendications 3 à 7.
